# EUROPEAN PATENT APPLICATION

(11) **EP 4 819 630 A2**
(43) Date of publication of application: **07.10.2026**
(21) Application number: 26199740.7
(22) Date of filing: 13.05.2022
(51) Int. Cl.: H04N 23/57

(54) **CAMERA MODULE AND VEHICLE COMPRISING SAME**

(30) Priority: 14.05.2021 KR 20210063036; 20.08.2021 KR 20210110389; 20.12.2021 KR 20210183214
(62) Document number(s) of the earlier application(s) in accordance with Art. 76 EPC: 22807869.7 / 4 339 677
(71) Applicant: LG Innotek Co., Ltd., Seoul 07796 (KR)
(72) Inventor: CHOI, Se Yeon, 07796 Seoul (KR); PARK, Sung Jin, 07796 Seoul (KR); SEOK, Seung Won, 07796 Seoul (KR); LIM, Jun Young, 07796 Seoul (KR)
(74) Representative: DREISS Patentanwälte PartG mbB

(57) **Abstract**

The camera module disclosed in the embodiment of the invention includes a lens barrel having a through hole therein; and a lens part disposed in the through hole of the lens barrel and having first to third lenses in which optical axis are aligned from the object side toward the sensor side, and an image sensor. The materials of the second lens and the first lens are different, the refractive index of the second lens is lower than that of the first lens. Each of the first to third lenses includes first to third flange portions extending from the optical axis toward the inner surface of the lens barrel, an outer diameter of the lens barrel at a position where an upper portion of the first flange and the lens barrel are in contact is a first outer diameter, an outer diameter of the lens barrel at a position where an upper portion of the second flange portion and the lens barrel are in contact is a second outer diameter, an outer diameter of the lens barrel at a position where an upper portion of the third flange and the lens barrel are in contact is a third outer diameter, an outer diameter of the lens barrel at a position where an upper portion of the image sensor and the lens barrel are in contact is a four outer diameter, and the third outer diameter is smaller than the fourth outer diameter and greater than the second outer diameter.

## Description

### [Technical Field]

An embodiment of the invention relates to a camera module and a vehicle having the same.

### [Background Art]

ADAS (Advanced Driving Assistance System) is an advanced driver assistance system for assisting the driver to drive and is composed of sensing the situation in front, determining the situation based on the sensed result, and controlling the behavior of the vehicle based on the situation determination. For example, the ADAS sensor device detects a vehicle ahead and recognizes a lane. Then, when the target lane or target speed and the target in front are determined, the vehicle's ESC (Electrical Stability Control), EMS (Engine Management System), MDPS (Motor Driven Power Steering), etc. are controlled. Typically, ADAS may be implemented as an automatic parking system, a low-speed city driving assistance system, a blind spot warning system, and the like. The sensor devices for sensing the forward situation in ADAS are a GPS sensor, a laser scanner, a front radar, and a lidar, and the most representative is a front camera for photographing the front of the vehicle.

The driver condition monitoring system consists of a near-infrared (NIR) camera and an electronic control unit (ECU). The driver condition monitoring system uses NIR LEDs to project infrared rays onto the driver's face, and acquires the driver's face image onto which the infrared rays are projected. The ECU processes the driver's face image obtained from the NIR camera to detect eyes, nose, and mouth, and checks the direction in which the driver's gaze is directed and whether the eyes are opened or closed. Based on the direction in which the driver's gaze is directed and whether the eyes are opened or closed, the ECU may determine the driver's condition, and accordingly, may determine whether the driver is negligent or not. When the driver's negligence is determined, the ECU warns the driver by outputting a warning signal through an output device such as a buzzer.

In recent years, research on a sensing system for sensing the surroundings of a vehicle has been accelerated for the safety and convenience of a driver. Vehicle detection systems are used for various purposes, such as preventing collisions with objects that the driver did not recognize by detecting objects around the vehicle, as well as performing automatic parking by detecting empty spaces, and provides the most essential data for automatic vehicle control. As for such a detection system, a method using a radar signal and a method using a camera are commonly used. The vehicle camera module is used to be built-in front and rear surveillance cameras and black boxes in a vehicle, and a subject is captured as a picture or a video. Since the vehicle camera module is exposed to the outside, the shooting quality may be deteriorated due to moisture and temperature. In particular, the camera module has a problem in that the optical properties change depending on the ambient temperature and the material of the lens.

### [Disclosure]

### [Technical Problem]

An embodiment of the invention may provide a camera module having a new lens optical system.

Embodiments of the invention may provide a camera module with a new lens barrel.

Embodiments of the invention may provide a camera module having an optical system having at least one thermal compensation lens among lenses and a lens barrel for suppressing thermal deformation. An embodiment of the invention may provide a camera module for reducing thermal deformation through a contact characteristic between a flange portion of at least one of the lenses and an inner sidewall of the lens barrel. An embodiment of the invention may provide a mobile terminal having a camera module and a mobile device such as a vehicle.

### [Technical Solution]

A camera module according to an embodiment of the invention includes a lens barrel including a through hole; and a lens part disposed inside the through hole and including a first lens, a second lens and a third lens, wherein the lens barrel includes a first inner sidewall, a second inner sidewall and a third inner sidewall inside the through hole, wherein the first lens is in contact with the first inner sidewall, the second lens is in contact with the second inner sidewall, and the third lens is in contact with the third inner sidewall, and the first lens includes a glass material, the second lens and the third lens include a plastic material, the diameter of the first lens is 5 mm or less, and diameters of the second lens and the third lens is 10 mm or less, a coefficient of linear expansion of the lens barrel is 31 ppm/°C to 60 ppm/°C.

According to an embodiment of the invention, the first lens, the second lens, and the third lens include an effective region to which light is incident and an ineffective region to which light is not incident, a diameter of the first lens, a diameter of the second lens and a diameter of the third lens are defined as a sum of the effective region and the ineffective region.

According to an embodiment of the invention, the coefficient of linear expansion of the lens barrel is greater than a coefficient of linear expansion of the first lens, and the coefficient of linear expansion of the lens barrel is less than or equal to coefficients of linear expansion of the second lens and the third lens. The coefficient of linear expansion of the first lens is greater than 0 ppm/°C to 20 ppm/°C, the coefficient of linear expansion of the second lens is from 5 ppm/°C to 60 ppm/°C, and the coefficient of linear expansion of the third lens is from 5 ppm/°C to 60 ppm/°C.

According to another example of the invention, the diameter of the first lens is 3 mm to 5 mm, the diameters of the second lens and the third lens are 3 mm to 9 mm, and the diameter of the first lens is smaller than the diameters of the second lens and the third lens. According to an embodiment of the invention, the coefficient of linear expansion of the first lens is greater than 0 ppm/°C and 10 ppm/°C or less, the coefficient of linear expansion of the second lens is from 50 ppm/°C to 60 ppm/°C, and the coefficient of linear expansion of the third lens is from 50 ppm/°C to 60 ppm/°C.

In the camera module according to the embodiment, the diameter of the first lens is 3.2 mm to 4.4 mm, the diameters of the second lens and the third lens are 4.5 mm to 8 mm, and the diameter of the first lens is smaller than the diameters of the second lens and the third lens. The coefficient of linear expansion of the lens barrel is 29 ppm/°C to 50 ppm/°C or 39 ppm/°C to 60 ppm/°C.

According to an embodiment of the invention, the camera module includes a first mode for changing from a first temperature to a second temperature that is higher than the first temperature; and a second mode that changes from the first temperature to a third temperature that is lower than the first temperature, wherein a distance between the first lens and the first inner sidewall on the first mode is 15 µm or less, a distance between the second lens and the second inner sidewall on the second mode is 6 µm or less, a distance between the third lens and the third inner sidewall on the second mode is 6 µm or less, and the first temperature is in a range of 20 °C to 30 °C, the second temperature is in a range of 80 °C to 105 °C, and the third temperature is in a rage of -40 °C to -30 °C.

A camera module according to another embodiment of the invention includes a lens barrel including a through hole; and a lens part disposed inside the through hole and including a first lens, a second lens and a third lens, wherein the lens barrel includes a first inner sidewall, a second inner sidewall and a third inner sidewall inside the through hole, wherein the first lens is in contact with the first inner sidewall, the second lens is in contact with the second inner sidewall, the third lens is in contact with the third inner sidewall, and the first lens expands in a first mode changing from a first temperature to a second temperature that is higher than the first temperature, and the second lens and the third lens shrink in a second mode changing from the first temperature to a third temperature that is lower than the first temperature, a diameter of the first lens is 5 mm or less, diameters of the second lens and the third lens are 10 mm or less, and a coefficient of linear expansion of the lens barrel is 31 ppm/°C to 60 ppm/°C, a distance between the first lens and the first inner sidewall on the first mode is 18 µm or less, a distance between the second lens and the second inner sidewall on the second mode is 9 µm or less, a distance between the third lens and the third inner sidewall on the second mode 9 µm or less, the first temperature is in a range of 20°C to 30°C, the second temperature is in a range of 80°C to 105°C, and the third temperature is in a range of -40 °C to -30 °C.

According to an embodiment of the invention, the first lens includes glass, and the second lens and the third lens include plastic. The coefficient of linear expansion of the lens barrel is greater than the coefficient of linear expansion of the first lens, and the coefficient of linear expansion of the lens barrel is less than or equal to the coefficients of linear expansion of the second lens and the third lens.

According to another embodiment of the invention, the coefficient of linear expansion of the first lens is greater than 0 ppm/°C to 20 ppm/°C, the coefficient of linear expansion of the second lens is from 5 ppm/°C to 60 ppm/°C, and the coefficient of linear expansion of the third lens is 5 ppm/°C to 60 ppm/°C, the diameter of the first lens is 3 mm to 5 mm, the diameters of the second lens and the third lens are 3 mm to 9 mm, and the diameter of the first lens is smaller than the diameters of the second and third lenses.

According to another embodiment of the invention, the coefficient of linear expansion of the first lens is greater than 0 ppm/°C to 20 ppm/°C, the coefficient of linear expansion of the second lens is from 50 ppm/°C to 60 ppm/°C, and the coefficient of linear expansion of third lens is 50 ppm/°C to 60 ppm/°C, the diameter of the first lens is 3.2 mm to 4.4 mm, the diameters of the second lens and the third lens are 4.5 mm to 8 mm, and the diameter of the first lens is smaller than the diameters of the second and third lenses.

According to another embodiment of the invention, the coefficient of linear expansion of the lens barrel is in a range of 29 ppm/°C to 50 ppm/°C or 39 ppm/°C to 60 ppm/°C.

According to another embodiment of the invention, a difference between an expansion amount of the lens barrel and an expansion amount of the first lens (expansion amount of the lens barrel - expansion amount of the first lens) on the first mode is 18 µm or less, and a difference between the shrinkage amount of the second lens or the third lens and the shrinkage amount of the lens barrel (shrinkage amount of second or third lens - shrinkage amount of the lens barrel) on the second mode is 9 µm or less.

A camera module according to another embodiment of the invention includes a lens barrel including a through hole and a lens part disposed inside the through hole and including a first lens, a second lens, and a third lens, wherein the lens barrel includes the a first inner sidewall, a second inner sidewall, and a third inner sidewall inside the through hole, wherein the first lens includes glass, the second lens and the third lens include a plastic material, and the second lens includes a plastic material. A diameter of at least one of the first lens, the second lens, and the third lens satisfies the following equation. Formula: 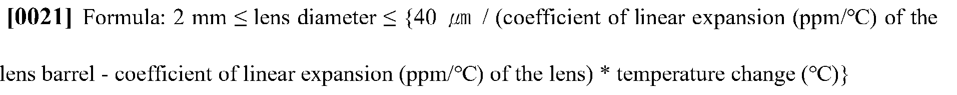 2 mm ≤ lens diameter ≤ {40 µm / (coefficient of linear expansion (ppm/°C) of the lens barrel - coefficient of linear expansion (ppm/°C) of the lens) * temperature change (°C)}

A camera module according to another embodiment of the invention includes a lens barrel including a through hole and a lens part disposed inside the through hole and including a first lens, a second lens, and a third lens, wherein the lens barrel includes the a first inner sidewall, a second inner sidewall, and a third inner sidewall inside the through hole, wherein the first lens includes a glass material, the second lens and the third lens include a plastic material, and a diameter of at least one of the first lens, the second lens, and the third lens satisfies the following equation, and the first lens is changed from a first temperature in a range of 20°C to 30°C to a second temperature in a range of 80°C to 105°C, and the second lens and the third lens are changed from the first temperature in a range of 20°C to 30°C to a third temperature in a range of -40°C to -30°C. Formula: 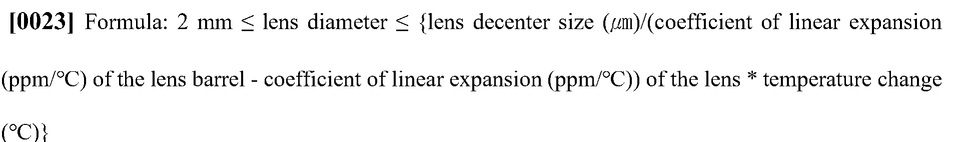 2 mm ≤ lens diameter ≤ {lens decenter size (µm)/(coefficient of linear expansion (ppm/°C) of the lens barrel - coefficient of linear expansion (ppm/°C)) of the lens * temperature change (°C)}

### [Advantageous Effects]

According to an embodiment of the invention, it is possible to reduce thermal deformation due to a material difference between lenses in a camera module or a shape change according to temperature. According to an embodiment of the invention, it is possible to reduce the thermal deformation of the lenses or the shape change according to the temperature by providing a constant thickness of the lens barrel disposed around the lenses in the camera module.

According to an embodiment of the invention, it is possible to improve the reliability of the camera module by providing a camera module having a lens and a lens barrel that may be mechanically thermally compensated.

According to an embodiment of the invention, thermal deformation is suppressed by adjusting the contact position and/or contact area with the lens barrel for the plastic lens, thereby improving the reliability of the camera module.

According to an embodiment of the invention, in consideration of the contact characteristics between the flange portion of the lens and the inner surface of the lens barrel, it is possible to suppress a change in optical characteristics due to expansion and shrinkage of the lens in a direction orthogonal to the optical axis. The embodiment of the invention suppresses a change in the shape of a lens that is optically sensitive to a thermal change, thereby suppressing a problem in which optical performance (MTF) is sharply deteriorated due to misalignment of optical axes of the lenses.

The camera module according to an embodiment of the invention may set the coefficient of linear expansion of the barrel capable of minimizing the de-centering of the lenses according to the materials and diameters of the lenses. In detail, the coefficient of linear expansion, which is an intrinsic property of the material, may be different for each material of the lenses. At this time, when the camera module is changed to a high temperature state or a low temperature state, the decentering of the lenses due to the difference in the expansion amount or shrinkage amount due to the difference in the coefficient of linear expansion between the lenses included in the camera module and the difference in the coefficient of linear expansion between the lens and the barrel may occur. Accordingly, in consideration of the size range of the coefficient of linear expansion of each lens and the diameter size of the lenses according to the materials of the lenses, the difference in the expansion amount and the difference in the shrinkage amount between the lens and the barrel may be controlled. That is, the camera module according to the embodiment may set the range of the coefficient of linear expansion of the barrel to a range in which the decentering generated in the high temperature state or the low temperature state of the camera module does not significantly affect the optical characteristics. Accordingly, since the camera module is set to have the set coefficient of linear expansion of the lenses and the coefficient of linear expansion of the barrel in the set range in the set diameter, the camera module may be adjusted with the de-center range of the lenses, which does not significantly affect the optical characteristics of the lens in a high temperature state and a low temperature state.

Accordingly, the camera module according to the embodiment may maintain uniform operating performance in both the room temperature, the high temperature and the low temperature state by minimizing the de-center range even in a high temperature state and a low temperature state. According to the embodiment of the invention, it is possible to improve the optical reliability of the camera module. In addition, it is possible to improve the reliability of the camera module and the vehicle camera device having the same.

### [Description of Drawings]

FIG. 1 is an example of a cross-sectional side view of a camera module according to a first embodiment of the invention.
FIG. 2 is a partial side cross-sectional view illustrating a combination of two lenses close to an object side and a lens barrel in the camera module of FIG. 1.
FIG. 3 is a partial side cross-sectional view illustrating a combination of the last lens close to a sensor and the lens barrel in the camera module of FIG. 1.
FIG. 4 is a perspective view illustrating a lens barrel according to a first embodiment of the invention.
FIG. 5 is an example of a cross-sectional side view of the lens barrel of FIG. 4.
FIG. 6 is a side cross-sectional view of a camera module having the lens barrel of FIG. 4 of the invention.
FIG. 7 is a partial side cross-sectional view illustrating first and second support portions of the lens barrel of FIG. 6.
FIG. 8 is a partially enlarged view for explaining a third support portion of the lens barrel of FIG. 6.
FIG. 9 is a view illustrating an outer diameter of the lens barrel of FIG. 6.
FIG. 10(A)(B) is diagrams comparing the thermal stress of the camera module of the comparative example and the invention.
FIG. 11(A)(B) is a view comparing the strain rate due to heat of the camera module of the comparative example and the invention.
FIG. 12 (A)(B) is a graph comparing a change rate of the diffraction optical performance (MTF) of the camera module of the comparative example and the invention.
FIGS. 13 and 14 are side cross-sectional views illustrating a camera module according to a second embodiment of the invention.
FIGS. 15 to 17 are tables for explaining the decentering of the lens part of the camera module according to examples of the second embodiment of the invention.
FIGS. 18 and 19 are tables for comparing diameter changes of lenses in a lens barrel in a camera module according to examples of the third embodiment of the invention.
FIG. 20 is a plan view illustrating an example of a vehicle having a camera module according to an embodiment of the invention.

### [Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element. Several embodiments described below may be combined with each other, unless it is specifically stated that they cannot be combined with each other. In addition, the description of other embodiments may be applied to parts omitted from the description of any one of several embodiments unless otherwise specified.

In the description of the invention, the first lens means the lens closest to the object side among the plurality of lenses aligned with the optical axis, and the last lens means the lens closest to the sensor side among the plurality of lenses aligned with the optical axis. In the description of the invention, all measures for the radius, thickness/distance, TTL, etc. of the lens are mm unless otherwise specified. In the present specification, the shape of the lens is shown based on the optical axis of the lens. For example, that the object-side or sensor-side surface of the lens is convex means that the optical axis vicinity is convex on the object-side or sensor-side surface of the lens, but does not mean that the optical axis periphery is convex. Accordingly, even when the object-side or sensor-side surface of the lens is described as being convex, the portion around the optical axis on the object-side or sensor-side surface of the lens may be concave. That the object-side or sensor-side surface of the lens is concave means that the vicinity of the optical axis is concave on the object-side or sensor-side surface of the lens, but does not mean that the periphery of the optical axis is concave. Accordingly, even when the object-side or sensor-side surface of the lens is described as being concave, the portion around the optical axis on the object-side or sensor-side surface of the lens may be convex. In the present specification, it should be noted that the thickness and radius of curvature of the lens are measured based on the optical axis of the lens. That is, the convex surface of the lens may mean that the lens surface of the region corresponding to the optical axis has a convex shape, and the concave lens surface means that the lens surface of the region corresponding to the optical axis has a concave shape can do. In addition, "object-side surface" may mean a surface of the lens that faces the object side with respect to the optical axis, and "sensor-side surface" may mean a surface of the lens that faces the sensor-side surface with respect to the optical axis.

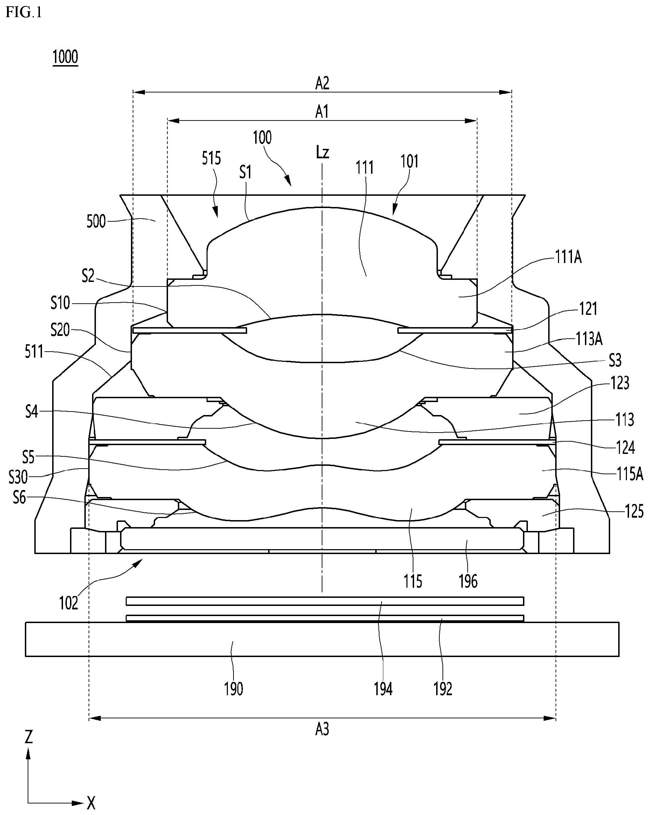

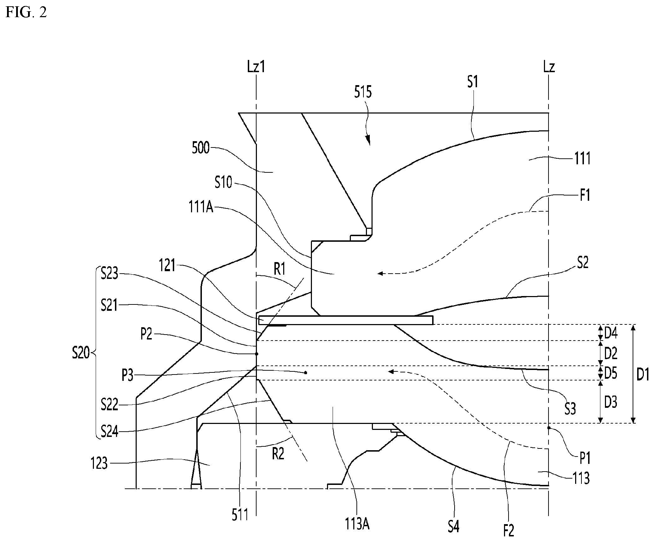

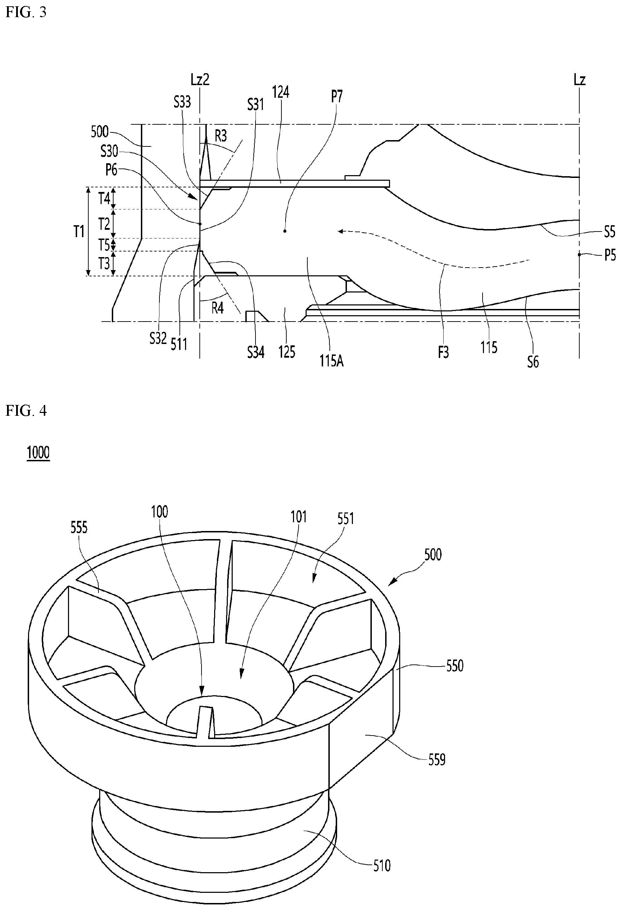

FIG. 1 is an example of a side cross-sectional view of a camera module according to a first embodiment of the invention, FIG. 2 is a partial side cross-sectional view showing a combination of two lenses close to the object side and a lens barrel in the camera module of FIG. 1, FIG. 3 is a partial side cross-sectional view showing a combination of the last lens close to the sensor side and the lens barrel in the camera module of FIG. 1.

Referring to FIGs. 1 to 3, the camera module 1000 according to the first embodiment of the invention may include a lens barrel 500, a lens part 100 having a plurality of lenses 111, 113, and 115, and a space maintaining member 121, 123, 124, and 125 having a light blocking function, a main substrate 190 and an image sensor 192. The camera module 1000 may include an optical cover glass 194 and an optical filter 196 between the last lens of the lens part 100 and the image sensor 192.

The lens barrel 500 may include a through hole 515 having a first opening 101 having an open upper side and a second opening 102 having an open lower side. The first opening 101 and the second opening 102 may face each other in an optical axis direction. The through hole 515 may have an inside of the lens barrel 500 open in the optical axis Lz direction, and may function as a receiving part in which the lenses 111, 113, and 115 are received. An upper width, a lower width, and a middle width of the through hole 515 may be different from each other.

The lens part 100 inside the lens barrel 500 may be exposed through the first opening 101. In detail, a lens disposed at the uppermost side of the lenses of the lens part 100 may be exposed through the first opening 101. Accordingly, the external light may be incident on the lens part 100 inside the lens barrel 500. The image sensor 192 may be exposed through the second opening 102. In detail, a lens disposed at the lowermost portion among the lenses of the lens part 100 may be exposed through the second opening 102. That is, the lens disposed at the lowermost portion may be disposed to face the image sensor 192 through the second opening 102. Accordingly, the light sequentially passing through the plurality of lenses may be incident on the image sensor 192 outside the lens barrel 500.

The lens part 100 may be an optical system in which three or more lenses 111, 113, and 115 are stacked. The lens part 100 may include an optical system in which five or less lenses are stacked. The lens part 100 may include three or more or five or less solid lenses. The lens part 100 may include at least one plastic lens, or at least one glass lens and plastic lens. In the lens part 100 according to an embodiment of the invention, there may be more lenses made of a plastic material than lenses made of a glass material, or two or more lenses. Here, the lens part 100 may be laminated with plastic lenses and/or glass lens(s). Here, the plastic material is more than 5 times higher than the coefficient of thermal expansion (CTE) of the glass material, and the change value |dN/dt| of the refractive index as a function of temperature is more than 10 times higher than that of the glass material. Here, dN is a change value of the refractive index of the lens, and dT is a change value of the temperature.

For convenience of description, the lens part 100 includes a first lens 111, a second lens 113, and a third lens 115, and the first lens 111 and the second lens 113, and the third lens 115 is stacked toward the image sensor 192 from the object side, and may be aligned with the optical axis Lz.

The lenses 111, 113, and 115 of the lens part 100 are coupled to the through hole 515 in the lens barrel 500, and may be coupled, for example, from the sensor side to the object side direction, in the opposite direction thereof, or in both directions. The lenses 111, 113, and 115 in the through hole 515 of the lens barrel 500 will be described as an example in which they are coupled in a direction from a sensor side to an object side.

Each of the lenses 111, 113, and 115 may include an effective region having an effective diameter through which light is incident and an ineffective region outside the effective region. The flange portions 111A, 113A, and 115A of the lenses 111, 113 and 115 may be ineffective regions. The ineffective region may be a region in which light is blocked by the light blocking films 121 and 124. The flange portions 111A, 113A, and 115A may extend in a direction orthogonal to the optical axis Lz, a radial direction, or a circumferential direction from the effective region of the lenses 111, 113 and 115.

A first light blocking film 121 may be disposed around the outer periphery between the first lens 111 and the second lens 113, and at least one of the space maintaining portion 123 and a second light blocking film 124 may be disposed around the outer periphery between the second lens 113 and the third lens 115. The first and second light blocking films 121 and 124 may function as a member for blocking light in the ineffective region, and any one of the first and second light blocking films 121 and 124 may be used as an aperture stop. The space maintaining portion 123 may maintain a gap between the second and third lenses 113 and 115 and may have a light blocking function. In the absence of the space maintaining portion 123, the flange portions of the two lenses aligned in the optical axis direction may be in contact with each other or may be in contact with each other by a light blocking film. At least one or all of the first light blocking film 121, the space maintaining portion 123, and the second light blocking film 124 may function as a spacer. The thickness of the first and second light blocking films 121 and 124 may be thinner than the thickness of the space maintaining portion 123. Here, the aperture stop may be disposed around the second surface S2 of the first lens 111 or may be used as the second surface S2.

A support member 125 may be disposed around the lower periphery of the third lens 115, and the support member 125 may support the third lens 115 or maintain a distance from the optical filter 196. Here, a portion of the outer side S30 of the third lens 115 may be adhered to the inner sidewall 511 of the lens barrel 500 with an adhesive.

The diameter A1 of the first lens 111 may be smaller than the diameter A2 of the second lens 113, and the diameter A2 of the second lens 113 may be smaller than the diameter A3 of the third lens 115. The diameters A1, A2, and A3 of the first, second, and third lenses 111, 113, and 115 may gradually increase from the object side to the sensor side. The outer shape in which the first, second, and third lenses 111, 113, and 115 are stacked may be a pyramid shape or a polygonal shape. Each of the diameters A1, A2, and A3 of the lenses 111, 113, and 115 may be a diameter of a region having the effective region and the ineffective region. Each of the diameters A1, A2, and A3 of the lenses 111, 113, and 115 may be the diameter of each of the flanges 111A, 113A, and 115A.

The first lens 111 is a lens closest to the subject, and at least one or both of the object-side first surface S1 on which light is incident and the sensor-side second surface S2 on which light is emitted is spherical or aspherical. The first surface S1 of the first lens 111 may be convex, and the sensor-side second surface S2 may be concave. The first lens 111 may be made of glass. The first lens 111 may include a first flange portion 111A on the outside. A portion of the outer side S10 of the first flange portion 111A may be in contact with the inner sidewall 511 of the lens barrel 500. The length of the contact surface contacting the inner sidewall 511 of the lens barrel 500 in the outer side of the first flange portion 111A may be 70% or more of the thickness of the first flange portion 111A. A length direction of the contact surface of the first flange portion 111A is parallel to the optical axis Lz or inclined at a predetermined angle, or the first flange portion 111A may extend in a direction X orthogonal to the optical axis Lz from the outside of the effective diameter of the first lens 111. The thickness of the first flange portion 111A may be a distance between two surfaces in contact with the optical members in the object-side and sensor-side regions of the first flange portion 111A. The optical member may be an object in which a lens, a lens barrel, a space maintaining member, an aperture stop, a light blocking film, and the like are disposed inside the lens barrel. The length in contact with the inner sidewall 511 of the lens barrel 500 is the length from one end of the object side of the outer side of the first flange portion 111A to one end of the sensor side.

Since the first lens 111 is provided with a glass material, when the camera module 1000 is exposed to light from the inside or outside of the vehicle, discoloration due to the plastic material may be prevented, and deformation F1 due to heat may be reduced. When the camera module 1000 is disposed in a vehicle, the first lens 111 may be made of glass or plastic.

The first lens 111 may have a refractive index of 1.7 or more or 1.8 or more, or may be in a range of 1.7 to 2.3. When expressed as an absolute value, the radius of curvature of the first surface S1 of the first lens 111 on the optical axis Lz may be smaller than the radius of curvature of the second surface S2, and may be, for example, 3.3 mm or less. The difference between the radius of curvature of the first surface S1 of the first lens 111 and the radius of curvature of the second surface S2 of the first lens 111 may be 1 mm or more, and may be, for example, in the range of 1 mm to 3 mm. The center thickness of the first lens 111 may be the thickest among the lenses of the lens part 100, and may be, for example, 1 mm or more. When explaining at the size of the effective diameter of the first lens 111, the effective diameter of the first surface S1 may be larger than the effective diameter of the second surface S2.

The second lens 113 and the third lens 115 may be made of a material different from that of the first lens 111 and may have a refractive index different from that of the first lens 111. The second lens 113 may be made of a plastic material. The second lens 113 may be disposed between the first lens 111 and the third lens 115 and may have a second flange portion 113A on the outside. The third lens 115 may be made of a plastic material. The third lens 115 is disposed between the second lens 113 and the optical filter 196 and may have a third flange portion 115A on the outside. The second lens 113 and the third lens 115 may be injection molded from a plastic material.

Referring to FIGS. 1 and 2, the second lens 113 includes an object-side third surface S3 and a sensor-side fourth surface S4, and the third surface S3 and the fourth surface S4 may be aspherical. The third surface S3 and the fourth surface S4 of the third lens 113 may have different radii of curvature. The third surface S3 may be concave, and the sensor-side fourth surface S4 may be convex. As another example, the second lens 113 may have two surfaces having different radii of curvature. For example, the third surface S3 may be convex and the fourth surface S4 may be concave. Alternatively, the third surface S3 may be convex, and the fourth surface S4 may have a convex shape. Alternatively, the third surface S3 may have a concave shape and the fourth surface S4 may have a concave shape.

The second lens 113 may include a second flange portion 113A on the outer periphery. A portion of the outer side S20 of the second flange portion 113A may be in contact with the inner sidewall 511 of the lens barrel 500. The second flange portion 113A extends in a direction X perpendicular to the optical axis Lz outside the effective diameter of the second lens 113. The thickness D1 of the second flange portion 113A may be a distance between two surfaces in contact with the optical members in the object-side and sensor-side regions of the second flange portion 113A. The optical member may be an object in which a lens, a lens barrel, a space maintaining member, an aperture stop, a light blocking film, and the like are disposed inside the lens barrel. The thickness D1 of the second flange portion 113A of the second lens 113 may be a distance between a surface of the second flange portion 113A in contact with the first light blocking film 121 and a surface of the second flange portion 113A in contact with the space maintaining portion 123, for example, the distance may be a distance in a direction parallel to the optical axis.

As shown in FIG. 2, the outer side S20 of the second flange portion 113A has a first contact surface S21 in contact with the inner sidewall 511 of the lens barrel 500, a first inclined surface S23 between the first contact surface S21 and the object-side surface, and a second inclined surface S24 between the first contact surface S21 and the sensor-side surface. The outer side S20 of the second flange portion 113A extends from the first contact surface S21 in an axial direction parallel to the optical axis Lz, and may include a first non-contact surface S22 disposed between the first contact surface S21 and the second inclined surface S24.

The first contact surface S21 of the second flange portion 113A may be disposed on the outermost side of the second flange portion 113A and may be in contact with the inner sidewall 511 of the lens barrel 500. The first non-contact surface S22 may extend vertically or in the same plane from a lower end of the first contact surface S21, and may not contact the inner sidewall 511 of the lens barrel 500. A contact length D2 of the first contact surface S21 may be smaller than the thickness D1 of the second flange portion 113A. The contact length D2 of the first contact surface S21 may be 50% or less of the thickness D1 or may be in a range of 20% to 50% of the thickness D1. The direction Lz1 of the contact length D2 may be in the direction of the axis Lz1 parallel to the optical axis Lz, or may be inclined at a predetermined angle with respect to the axis Lz1 parallel to the optical axis Lz. A distance between the first non-contact surface S22 and the inner wall 511 may increase toward the sensor side. A vertical length D5 of the first non-contact surface S22 may be smaller than the contact length D2 of the first contact surface S21. When the second lens 113 is injection-molded, since the first non-contact surface S22 is extended from the lower end of the first contact surface S21 toward the sensor and is extended to be spaced apart from the inner sidewall 511 of the lens barrel 500, even if a structure such as a burr is generated on the first non-contact surface S22, the length D3 of the first non-contact surface S22 does not interfere with the surface contact of the first contact surface S21 and may be a distance at which the first contact surface S21 and the inner sidewall 511 of the lens barrel 500 may be in close contact with each other. Alternatively, the first non-contact surface S22 may prevent assembly failure of the second lens 113 due to a burr. The length D5 of the first non-contact surface S22 may be 1/15 or less or 1/20 or less of the thickness D1 of the second flange portion 113A. The thickness D1 of the second flange portion 113A may be 0.7 mm or more, for example, in a range of 0.7 mm to 1.2 mm.

The first inclined surface S23 may extend from one end of an object side of the first contact surface S21 toward the object-side surface of the first flange portion 113A at a first angle R1. The first angle R1 may be 40 degrees or less with respect to the axis Lz1 parallel to the optical axis, for example, in the range of 10 degrees to 40 degrees or in the range of 15 degrees to 35 degrees. When the first angle R1 is smaller than the above range, there is difficulty in injection molding, and when the first angle R1 is larger than the above range, the fixing force of the second flange portion 113A of the second lens 113 may be reduced or distorted.

The second inclined surface S24 may extend from one end of the sensor side of the first non-contact surface S22 toward the sensor-side surface of the first flange portion 113A at a second angle R2. The second angle R2 may be 40 degrees or less with respect to the axis Lz1 parallel to the optical axis, for example, in the range of 10 degrees to 40 degrees, or in the range of 15 degrees to 35 degrees. The second angle R2 may be equal to or smaller than the first angle R1. When the second angle R2 is smaller than the above range, there is difficulty in injection molding, and when the second angle R2 is larger than the above range, the fixing force of the second flange portion 113A of the second lens 113 may be reduced or distorted.

The refractive index of the second lens 113 may be lower than that of the first lens 111, and may be less than 1.7, for example, in the range of 1.45 to 1.69. A difference in refractive index between the second lens 113 and the first lens 111 may be 0.3 or more. When expressed as an absolute value, the radius of curvature of the third concave surface S3 of the second lens 113 may be greater than the radius of curvature of the convex fourth surface S4, for example, 7 mm or more or in the range of 5.1 mm to 7 mm. The radius of curvature of the fourth surface S4 may be 5 mm or less in absolute value, for example, may be in the range of 2 mm to 5 mm. The difference between the radius of curvature of the third surface S3 of the second lens 113 and the radius of curvature of the fourth surface S4 may be 1 mm or more, for example, in the range of 1 mm to 5 mm. The center thickness of the second lens 113 may be the second thickest among the lenses of the lens part 100, for example, thinner than the center thickness of the first lens 111, and thicker than the center thickness of the third lens 113. A center distance between the second lens 113 and the first lens 111 may be smaller than a thickness of the first lens 111 and may be greater than a center distance between the second and third lenses 113 and 115. In the size of the effective diameter of the second lens 113, the effective diameter of the third surface S3 may be smaller than the effective diameter of the fourth surface S4. The effective diameter of the third surface S4 may be greater than the effective diameter of the second surface S2, and may be smaller than the effective diameter of the first surface S1.

The second lens 113 is formed of a plastic material, and has a higher coefficient of thermal expansion than that of a glass material, so that deformation F2 due to heat may be greater. In an embodiment of the invention, when the radius of curvature of the third surface S3 and the fourth surface S4 of the second lens 113 is different, a relief structure may be provided on the outer side S20 of the second flange portion 113A so that the difference in the radius of curvature of the two surfaces S3 and S4 and the thermal deformation F2 due to the plastic material are minimized. The relief structure may optimize the area or the vertical length of the first contact surface S21 of the outer side S20 of the second flange portion 113A based on the thermal deformation F2 due to the difference in the radius of curvature of the third and fourth surfaces S3 and S4 on the optical axis of the second lens 113.

As an absolute value, when the radius of curvature of the third surface S3 of the second lens 113 on the optical axis Lz is greater than the radius of curvature of the fourth surface S4 by one or more, the optical axis center P1 between the third surface S3 and the fourth surface S4 may be located closer to the sensor side than the vertical center P3 of the second flange portion 113A. In addition, the center P2 of the length D2 of the first contact surface S21 may be located closer to the object side than the optical axis center P1 of the second lens 113, and may be located closer to the object side than the vertical center P3 of the second flange portion 113A.

Since the center P2 of the first contact surface S21 is located closer to the object side than the vertical center P3 of the second flange portion 113A, and the first contact surface S21 makes more contact with the inner sidewall 511 of the lens barrel 500 than the outer upper portion of the second flange portion 113A, the difference in curvature radii of the third and fourth surfaces S3 and S4 of the second lens 113 and the thermal deformation F2 caused by the plastic material may be alleviated. For example, the upper portion may mean the object side, and the lower portion may mean the sensor side. For example, a lens having a smaller radius of curvature may be a lens having a larger optical performance change according to temperature change. It may be a lens that is more sensitive to temperature changes. When the radius of curvature differs by 1 or more, a lens having a small radius of curvature may be more sensitive to temperature change and may be a lens having a larger optical performance change according to temperature change. By disposing the center P2 of the first contact surface S21 away from the surface having a small radius of curvature, deterioration in optical performance due to temperature change can be alleviated. Here, the length D2 of the first contact surface S21 may be formed in a range of 20% to 50% of the thickness D1 of the second flange portion 113A. Since the first contact surface S21 is in surface contact with the inner sidewall 511 of the lens barrel 500 at the outer upper portion of the second flange portion 113A, the first contact surface S21 may relieve the thermal deformation F2 transferred to the lower outer side of the second flange portion 113A. When the length D2 of the first contact surface S21 is smaller than the above range, the position of the second lens may be deformed as the temperature changes, when it is larger than the above range, the relaxation of the thermal deformation F2 of the second lens 113 may be insignificant, there is a difficulty in injection molding, and the thermal stress on the optical axis Lz may be increased and the thermal strain may be increased. The vertical length D2+D5 of the outer side S20 of the second flange portion 113A may be formed in a range of 20% to 50% of the thickness D1 of the second flange portion 113A.

The vertical length D2+D5 of the outer side S20 of the second flange portion 113A may be greater than the length D4 between two horizontal straight-lines passing both ends of the first inclined surface S23 of the second flange portion 113A, and may be smaller than the length D3 between two horizontal straight-lines passing both ends of the second inclined surface S24 of the second flange portion 113A.

Referring to FIGS. 1 and 3, the third lens 115 is formed of plastic and includes a fifth surface S5 on the object side and a sixth surface S6 on the sensor side thereof, and the fifth surface S5 and the sixth surface S6 may be an aspherical surface. The fifth surface S5 may be convex on the optical axis Lz, and the sixth surface S6 may be concave on the optical axis Lz. As another example, the third lens 115 has two surfaces with different radii of curvature expressed in absolute values, for example, the fifth surface S5 is convex and the sixth surface S6 is concave. The fifth surface S5 is convex and the sixth surface S6 is convex, or the fifth surface S5 is concave and the sixth surface S4 is concave. The third lens 115 may include a third flange portion 115A on the outside. A portion of the outer side S30 of the third flange portion 115A may be in contact with the inner sidewall 511 of the lens barrel 500.

The third flange portion 115A extends from the outside of the effective diameter of the third lens 115 in a direction X orthogonal to the optical axis Lz, and the thickness T1 may be an interval between two surfaces in contact with the optical member among the object-side and sensor-side regions of the third flange portion 115A. The optical member may be an object disposed inside the lens barrel, such as a lens, a lens barrel, a spacing member, an aperture stop, and a light blocking film. The thickness T1 of the third flange portion 115A of the third lens 115 is a distance between a surface of the third flange portion 115A in contact with the second blocking film 124 and a surface in contact with the support member 125, for example, the distance may be a distance in a direction parallel to the optical axis.

As shown in FIG. 3, the outer side S30 of the third flange portion 115A may include a second contact surface S31 contacting the inner sidewall 511 of the lens barrel 500, and a third inclined surface S33 between the second contact surface S31 and the object-side surface, and a fourth inclined surface S34 between the first contact surface S31 and the sensor-side surface. An outer side S30 of the third flange portion 115A may include a second non-contact surface S32 extending from the second contact surface S31 in an axial direction parallel to the optical axis Lz, and may be disposed between the second contact surface S31 and the fourth inclined surface S34. The second contact surface S31 may be disposed on the outermost side of the third flange portion 115A and may be in contact with the inner sidewall 511 of the lens barrel 500. The second non-contact surface S32 may extend vertically or in the same plane from a lower end of the second contact surface S31, and may not contact the inner sidewall 511 of the lens barrel 500. A contact length T2 of the second contact surface S31 may be smaller than a thickness T1 of the third flange portion 115A. The contact length T2 of the second contact surface S31 may be less than or equal to 60% of the thickness T1 or may be in the range of 30% to 60% or 20% to 50%. The direction Lz2 of the contact length T2 may be an axial direction parallel to the optical axis Lz or may be inclined at a predetermined angle with respect to an axis Lz2 parallel to the optical axis Lz. The second non-contact surface S32 may have a greater distance from the inner sidewall 511 toward the sensor. A vertical length T5 of the second non-contact surface S32 may be smaller than a contact length T2 of the second contact surface S31. When the third lens 115 is injection-molded, since the length T3 of the second non-contact surface S32 is extended from the lower end of the second contact surface S31 toward the sensor, and the second non-contact surface S32 is spaced apart from the inner sidewall 511 of the lens barrel 500, even if a structure such as a burr is generated on the second non-contact surface S32, the length T3 of the second non-contact surface S32 may be a distance at which the second contact surface S31 and the inner sidewall 511 of the lens barrel 500 may be in close contact with each other without interfering with the surface contact of the second contact surface S31. Alternatively, the second non-contact surface S32 may prevent assembly failure of the third lens 115 due to a burr. The length T5 of the second non-contact surface S32 may be 1/15 or less or 1/20 or less of the thickness T1 of the third flange portion 115A. The thickness T1 of the third flange portion 115A is smaller than the thickness D1, and may be 0.6 mm or more, for example, 0.6 mm to 1 mm.

The third inclined surface S33 may extend from the one end of an object side of the second contact surface S31 toward the object-side surface of the second flange portion 115A at a third angle R3. The third angle R3 may be 40 degrees or less with respect to the axis Lz2 parallel to the optical axis, for example, in the range of 10 degrees to 40 degrees, or in the range of 15 degrees to 35 degrees. When the third angle R3 is smaller than the above range, there is a difficulty in injection molding, and when the third angle R3 is larger than the above range, the fixing force of the third flange portion 115A of the third lens 115 may be reduced or distorted.

The fourth inclined surface S34 may extend from the one end of the sensor side of the second non-contact surface S32 toward the sensor-side surface of the third flange portion 115A at a fourth angle R4. The fourth angle R4 may be 40 degrees or less with respect to the axis Lz2 parallel to the optical axis, for example, in the range of 10 degrees to 40 degrees or in the range of 15 degrees to 35 degrees. The fourth angle R4 may be equal to or greater than the third angle R3. When the fourth angle R4 is smaller than the above range, there is difficulty in injection molding, and when the fourth angle R4 is larger than the above range, the fixing force of the third flange portion 115A of the third lens 115 may be reduced or distorted.

The refractive index of the third lens 115 may be lower than that of the first lens 111, and may be less than 1.7, for example, in the range of 1.45 to 1.69. The materials of the second and third lenses 113 and 115 may be the same, and may have the same refractive index. A difference in refractive index between the third lens 115 and the first lens 111 may be 0.3 or more. When expressed as an absolute value, the radius of curvature of the convex fifth surface S5 of the third lens 115 may be greater than the radius of curvature of the concave sixth surface S6, for example, and may be 3 mm or more or 3 mm to 6.5 mm. The radius of curvature of the sixth surface S6 may be an absolute value of 4 mm or less, for example, in a range of 1.5 mm to 4 mm. The difference between the radius of curvature of the fifth surface S5 of the third lens 115 and the radius of curvature of the sixth surface S6 may be 1 mm or more, for example, in a range of 1 mm to 5 mm or 2 mm to 5 mm.

A center thickness of the third lens 115 may be thinner than a center thickness of the first lens 111, and may be thinner than a center thickness of the second lens 113. A center distance between the third lens 115 and the second lens 113 may be greater than a center distance between the first and second lenses 111 and 113. A center distance between the third lens 115 and the optical filter 196 may be smaller than a center distance between the second and third lenses 113 and 115. In the size of the effective diameter of the third lens 115, the effective diameter of the fifth surface S5 may be smaller than the effective diameter of the sixth surface S6. The effective diameter of the sixth surface S6 may be larger than the effective diameter of the third surface S3, and may be larger than the effective diameter of the first surface S1.

The third lens 115 is formed of a plastic material, and has a higher coefficient of thermal expansion than that of a glass material, so that deformation F3 due to heat may be greater. In an embodiment of the invention, when there is a difference in the radius of curvature of the fifth surface S5 and the sixth surface S6 of the third lens 115, the difference in the radius of curvature of the two surfaces S5 and S6 and the plastic material A relief structure may be provided on the outer side S30 of the third flange portion 115A so that the thermal deformation F3 caused by the thermal deformation F3 is minimized. The relief structure may be optimized the area or the vertical length of the second contact surface S31 of the outer side S30 of the third flange portion 115A based on the thermal deformation F3 due to the difference in curvature radii of the fifth and sixth surfaces S5 and S6 on the optical axis of the third lens 115.
When the radius of curvature of the fifth surface S5 of the third lens 115 is greater than the radius of curvature of the sixth surface S6 by one or more as an absolute value on the optical axis Lz, the optical axis center P5 between the fifth surface S5 and the sixth surface S6 may be located closer to the sensor side than the vertical center P6 of the third flange portion 115A.
In addition, the center P6 of the length T2 of the second contact surface S31 is located closer to the object side than the optical axis center P5 of the third lens 115, and may be located closer to the object side than the vertical center P7 of the third flange portion 115A. Since the center P6 of the second contact surface S31 is located closer to the object side than the vertical center P7 of the third flange portion 115A, and the second contact surface S31 is in contact with the inner sidewall 511 of the lens barrel 500 more than the outer upper portion of the third flange portion 115A, it is possible to alleviate the difference in curvature radii between the fifth and sixth surfaces S6 and S6 of the third lens 115 and the thermal deformation F3 caused by the plastic material . For example, the upper portion may mean the object side, and the lower portion may mean the sensor side. For example, a lens having a smaller radius of curvature may be a lens having a larger optical performance change according to temperature change. When the radius of curvature differs by 1 or more, a lens having a small radius of curvature may be more sensitive to temperature change and may be a lens having a larger optical performance change according to temperature change. By disposing the center P6 of the second contact surface S31 away from a surface having a small radius of curvature, deterioration in optical performance due to temperature change may be alleviated.

Here, the length T2 of the second contact surface S31 is 60% or less compared to the thickness T1 of the third flange portion 115A, and may be in a range of 20% to 50% or 30% to 60%. The second contact surface S31 is in surface contact with the inner sidewall 511 of the lens barrel 500 from the outer upper portion of the third flange portion 115A, thereby moving toward the outer upper portion of the third flange portion 115A. When the length T2 of the second contact surface S31 is smaller than the above range, the relaxation of the thermal deformation F3 of the third lens 115 may be insignificant, and when it is greater than the above range, injection molding may be difficult, and stress due to heat on the optical axis Lz may be increased and thermal strain may be increased. The vertical length (T2+T5) of the outer side S30 of the third flange portion 115A may be in a range of 60% or less, 20% to 50% or 30% to 60 compared to the thickness T1 of the third flange portion 115A.

The vertical length (T2+T5) of the outer side S30 of the third flange portion 115A may be greater than the length T4 between two horizontal straight-lines passing both ends of the third inclined surface S33 of the third flange portion 113A, and may be smaller than the length T3 between two horizontal straight-lines passing both ends of the fourth inclined surface S34 of the third flange portion 113A. As another example, as an absolute value on the optical axis Lz, when the difference in radius of curvature between the third and fourth surfaces S3 and S4 in the second and third lenses 113 and 3115 or the difference in radius of the curvature of the fifth and sixth surfaces S5 and S6 is less than 1, the centers P2 and P6 of the first and second contact surfaces S21 and S31 may be located closer to the centers P3 and P7 of the flange portions 111A, 113A, and 115A.

Table 1 shows lens data of the first lens 111 to the third lens 115 according to an embodiment of the invention.

**[Table 1]**

| Lens | Surface | Radius of curvature(mm) | Thickness/ Interval (mm) | Index | Effective diameter (mm) |
|---|---|---|---|---|---|
| Lens 1 | S1 | 2.842 | 1.478 | 2.013 | 2.788 |
| | S2 | 4.145 | 0.673 | | 1.46 |
| | (Stop) | | | | |
| Lens 2 | S3 | -8.27 | 1.052 | 1.632 | 1.993 |
| | S4 | -3.83 | 0.375 | | 2.7 |
| Lens 3 | S5 | 1.748 | 0.591 | 1.632 | 3.186 |
| | S6 | 1.56 | 0.279 | | 3.94 |
| Optical | S7 | 1.00E+18 | 0.3 | 1.513 | 4.169 |
| filter | S8 | 1.00E+18 | 0.5 | | 4.275 |
| Cover glass | S9 | 1.00E+18 | 0.4 | 1.513 | 4.548 |
| | S10 | 1.00E+18 | 0.045 | | 4.689 |
| Image sensor | | 1.00E+18 | 0 | | 4.529 |

In Table 1, a seventh surface S7 may be an object-side surface of the optical filter, an eighth surface S8 may be a sensor-side surface, a ninth surface S9 may be an object-side surface of the cover glass, and a tenth surface S10 may be a sensor-side surface. In the first embodiment of the invention, in order to relieve thermal deformation of the second and third lenses 113 and 115, the material of the lens barrel 500 may be a heat dissipating material or a metallic material. The top view shape of the lens barrel 500 may include a circular column shape or a polygonal column shape. The lens barrel 500 may be formed of a resin or a plastic or metal material. A hydrophilic material may be coated or applied to the surface of the lens barrel 500.

The first and second light blocking films 121 and 124, the space maintaining portion 123, or the support member 125 may have openings therein, and the flange portions 111A, 113A, 115A and the inner sidewall 511 of the lens barrel 500 may be adhered with an adhesive. The first and second light blocking films 121 and 124, the space maintaining portion 123, and the support member 125 may include a poly ethylene film (PE) or a polyester (PET)-based film. As another example, the first and second light blocking films 121 and 124, the space maintaining portion 123, or the support member 125 may have a metal or alloy and an oxide film formed on the surface thereof. Materials included in the metal or alloy may include at least one of In, Ga, Zn, Sn, Al, Ca, Sr, Ba, W, U, Ni, Cu, Hg, Pb, Bi, Si, Ta, H, Fe, Co, Cr, Mn, Be, B, Mg, Nb, Mo, Cd, Sn, Zr, Sc, Ti, V, Eu, Gd, Er, Lu, Yb, Ru, Y, and La. The oxide film may be a black oxide or a brown oxide-treated oxide material using copper.

The image sensor 192 may be disposed on the main substrate 190. The image sensor 192 may be mounted, seated, contacted, fixed, temporarily fixed, supported, or coupled to the main substrate 190 on a plane intersecting the optical axis Lz. Alternatively, according to another embodiment, a groove or a hole (not shown) capable of accommodating the image sensor 192 may be formed in the main substrate 190, and in an embodiment, the image sensor 192 is not limited to the specific form disposed on the main substrate 190. The main substrate 189 may be a rigid PCB or an FPCB.

The image sensor 192 may perform a function of converting light passing through the lens part 100 into image data. A sensor holder may be disposed under the housing 500 to surround the image sensor 192 and protect the image sensor 192 from external foreign matter or impact. The image sensor 192 may be any one of a charge coupled device (CCD), a complementary metal-oxide semiconductor (CMOS), a CPD, and a CID. When there is a plurality of image sensors 192, one may be a color (RGB) sensor, and the other may be a black and white sensor.

The optical filter 196 may be disposed between the lens part 100 and the image sensor 192. The optical filter 196 may filter light corresponding to a specific wavelength range with respect to the light passing through the lenses 111, 113, 115, and 117. The optical filter 196 may be an infrared (IR) blocking filter that blocks infrared rays or an ultraviolet (UV) blocking filter that blocks ultraviolet rays, but the embodiment is not limited thereto. The optical filter 196 may be disposed on the image sensor 192. The cover glass 194 is disposed between the optical filter 196 and the image sensor 192, protects an upper portion of the image sensor 192, and may prevent deterioration of reliability of the image sensor 192.

The camera module 1000 according to an embodiment of the invention may include a driving member (not shown), wherein the driving member may move or tilt the barrel having at least one of the lenses in an optical axis direction and/or a direction orthogonal to the optical axis direction. The camera module may include an Auto Focus (AF) function and/or an Optical Image Stabilizer (OIS) function. The camera module 1000 according to an embodiment of the invention may be applied to an infrared camera or a driver monitoring camera. In addition, the angle of view of the camera module 1000 may be provided in a range of 50 degrees or more, for example, 50 degrees to 70 degrees. Here, when the lens part 100 mixes and stacks plastic lenses and at least one glass lens, thermal deformation due to the plastic lenses may be minimized. For example, since the lengths D2 and T2 of the first and second contact surfaces S21 and S31 of the second and third lenses 113 and 115 is arranged to be compensated according to the thermal deformations F2 and F3, at the high temperature (e.g., 80 degrees to 90 degrees) compared to the room temperature (e.g., 20 degrees to 30 degrees), the MTF change rate of the diffraction optical performance may be 10% or less. The high temperature may include a temperature inside the vehicle.

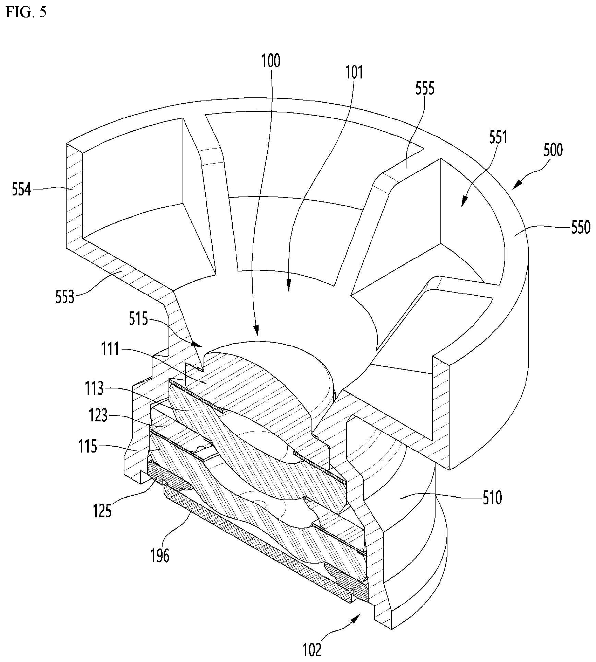

As shown in FIGs. 4 and 5, the lens barrel 500 may include an upper barrel portion 550 and a lower barrel portion 510. The upper barrel portion 550 and the lower barrel portion 550 may be integrally formed. The upper barrel portion 550 has an open region 551 greater than the diameter of the opening 101 therein, the open region 551 has an open at the top, and a plurality of ribs 555 may extend from the center which is the optical axis, in a direction of the outer circumferential surface. Three or more of the plurality of ribs 555 may be spaced apart from each other and support the upper barrel portion 550. The upper barrel portion 550 may be coupled to another transfer device, and a decrease in rigidity may be prevented by the rib 555. One surface of the upper barrel portion 550 is provided with a flat surface 559, which may be fixed in position or used as a bottom surface. The upper barrel portion 550 includes a bottom portion 553 and a side sidewall portion 554, and the ribs 555 may be connected to the bottom portion 553 and the side sidewall portion 554. The lower barrel portion 510 may extend along the outer peripheral surface of the opening 101 through the bottom portion 553. When the lower barrel portion 510 of the lens barrel 550 is provided in a structure or shape having different outer diameters, even if thermal deformation is generated by the inner lenses 111, 113, and 115, it may be effectively suppressed the thermal deformation.

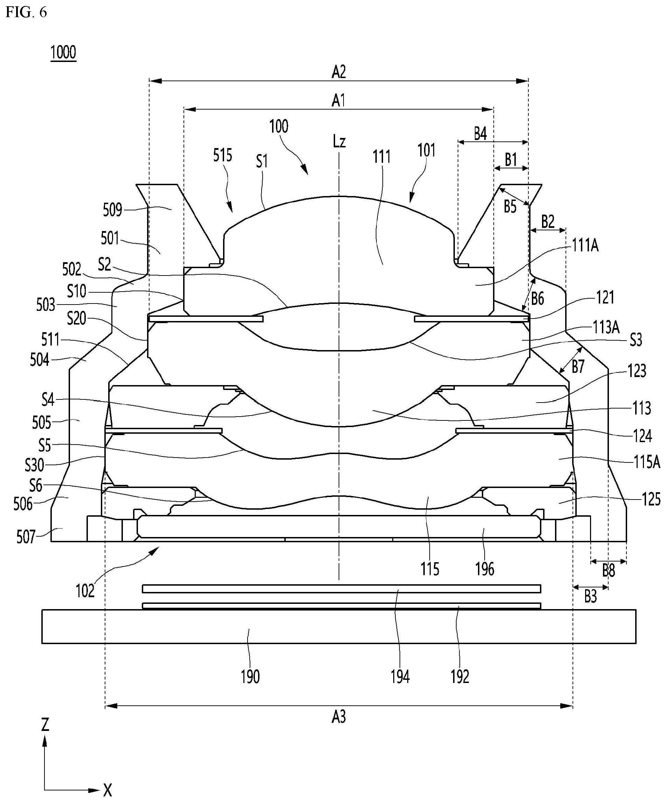

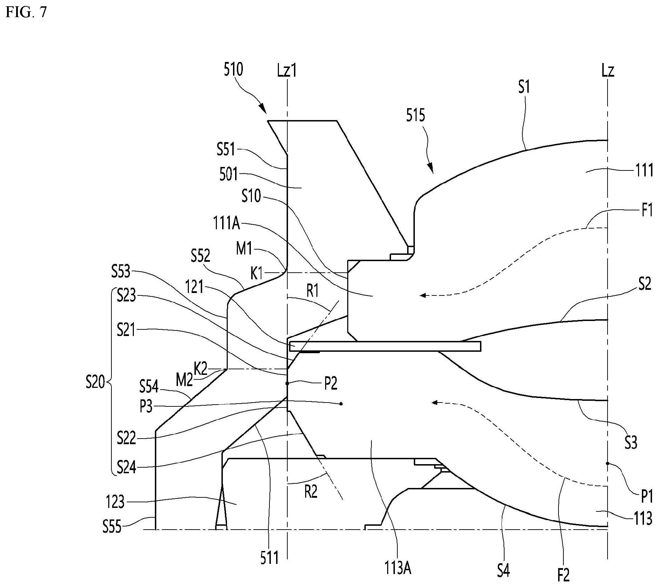

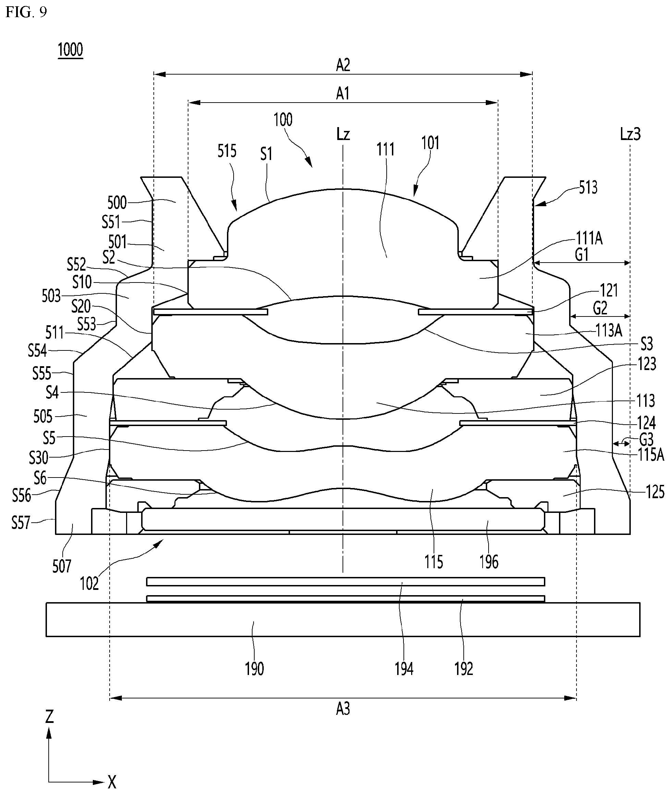

As shown in FIG. 6, the lower barrel portion 510 includes a first support portion 501 extending vertically to the outer side of the first lens 111, and a second support portion 503 extending vertically to the outer side of the second lens 113, and a third support portion 505 vertically extending outer side of the third lens 115. The first, second, and third support portions 501, 503, and 505 may include sections in which the inner sidewall 511 and the outer surface 513 of the lower barrel portion 510 are parallel to each other on the outer side of the first, second, and third lenses 111, 113, and 115. A first inclined portion 502 inclinedly extending from the first support portion 501 toward the second support portion 503, and a second inclined portion 504 inclinedly extending from the lower end of the second support portion 503 toward the upper end of the third support portion 505 may include. A lower end of the third support portion 505 may include a third inclined portion 506 and a lower end portion 507. As shown in FIG. 9, the vertical outer surface S51 of the first support part 501 extends to the vertical outer surface S53 of the second support part 503 as an inclined surface S52, and the vertical outer surface S53 of the second support part 503 may extend to the vertical outer surface S55 of the third support part 505 along the outwardly inclined surface S54. Also, the vertical outer surface S55 of the third support 505 may extend to the vertical outer surface S57 of the lower end portion 507 along the inclined outer surface S56. At least one or both of an optical filter 196, a cover glass 194, and/or an image sensor 192 may be disposed inside a lower end portion 507. The lens barrel 500 has a first outer diameter of the first support portion 501 based on the optical axis Lz, and the first outer diameter is a diameter of the lens barrel 500 at a position where the upper portion of the first flange portion 111A of the first lens 111 contacts with respect to the optical axis Lz. It is the diameter of the lens barrel 500 on the straight-line K1 indicated in FIG. 7.

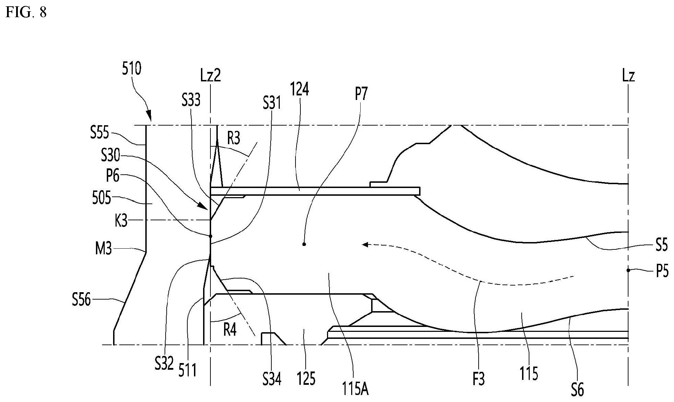

The lens barrel 500 has a second outer diameter of the second support portion 503 with respect to the optical axis Lz, and the second outer diameter is a diameter of the lens barrel 500 at a position where the upper portion of the second flange portion of the second lens 113 contacts with respect to the optical axis Lz. It is the diameter of the lens barrel 500 on the straight-line K2 shown in FIG. 7. The lens barrel 500 has a third outer diameter of the third support portion 505 based on the optical axis Lz, and the third outer diameter is a diameter of the lens barrel 500 at a position where the third flange portion 115A of the third lens 115 contacts with respect to the optical axis Lz. The third outer diameter is the diameter of the lens barrel 500 at the position where the uppermost surface of the third flange part 115A of the third lens 115 contacts with respect to the optical axis Lz, that is, it is the diameter of the lens barrel 500 on the straight-line K3 in FIG. 8. The second outer diameter may be greater than the first outer diameter and smaller than the third outer diameter. That is, when describing at the radius along the optical axis Lz, the second radius Z1 may be greater than the first radius Z1 and smaller than the third radius Z3. Here, the fourth outer diameter of the lower end portion 507 of the lens barrel 500 may be greater than the first, second, and third outer diameters, and may be the largest in the lower barrel portion 510, and may be smaller than the outer diameter of the upper barrel portion 550.

The outer diameter of the lens barrel, that is, the lower end portion 507 at the upper portion of the image sensor 192 or the position where the optical filter 196 and the lens barrel 500 contact each other, may have a fourth outer diameter. The third outer diameter may be smaller than the fourth outer diameter and larger than the second outer diameter. The thickness of the lower barrel portion 510 may have a substantially constant thickness, and a region having a smaller non-uniform thickness may have a smaller thickness than a region having a uniform thickness. The thicknesses B1, B2, and B3 of the first, second, and third support portions 501, 503, and 505 may be equal to each other, and may be formed in a range of 0.6 mm or less, for example, 0.5 mm ± 0.05 mm. At least one of the thicknesses B1, B2, and B3 of the first, second, and third support potions 501, 503, and 505 may have different thicknesses.

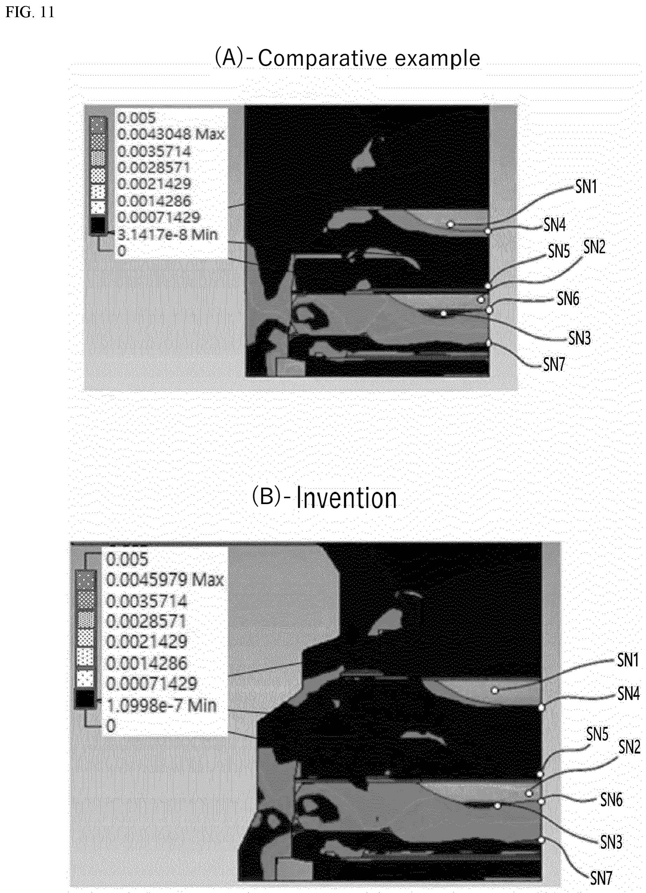

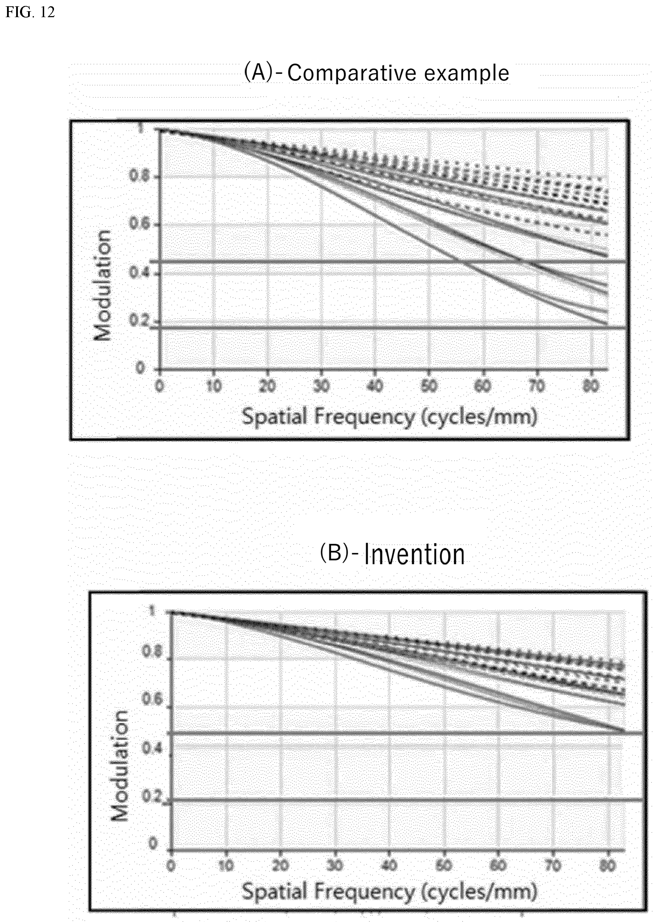

The thickness of the upper periphery of the first lens 111 in the region of the first support portion 501, that is, the upper portion 509 protruding into the barrel to guide the first flange portion 111A, is the maximum thickness B4 and may be 0.8 mm or more, for example, may be in the range of 0.8 mm to 1.2 mm. The upper portion 509 having this maximum thickness extends obliquely from the bottom portion 553 of the upper barrel portion 550 on the vertical outer surface S51 of the first support portion 501, and the upper portion 509 is the upper portion of the lower barrel portion 510 and may extend vertically from the upper end of the inclined outer surface to the first support portion 501. The outer surface perpendicular to the upper portion 509 is a portion on which the periphery of the first lens 111 is disposed. Here, the thickness B5 of the inclined upper portion 509 extending from the first support portion 501 to the upper barrel portion 550 and the thicknesses B6 and B7 of the first and second inclined portions 502 and 504 may be the same as each other, or may be formed in a range of 0.6 mm or less, for example, 0.5 mm±0.05 mm. The thickness B8 of the lower end portion 507 of the lens barrel 500 may be the same as the thicknesses B1 and B6, or may be 0.6 mm or less, for example, 0.5 mm±0.05 mm. By providing the thickness of the lens barrel 500, that is, the thickness of the lower barrel part 510 at a constant thickness, during lens injection molding, the problems of air bubbles penetrating into the barrel and the heat dissipation effect lowered due to the air bubbles are solved, it is possible to suppress of lens stress, and to minimize of the deformation of the lens(s). Here, as shown in FIG. 12, it is possible to improve the optical performance (MTF) by minimizing lens deformation in the periphery of the lens. FIG. 12(A) is a comparative example, and FIG. 11(A) has the same barrel shape as and FIG. 12(A), and Fig. 12(B) is an example employing the lens barrel of the invention and it may be seen that the optical performance (MTF) is improved by 30% or more compared to the example. The thickness of the lens barrel means a vertical distance from one surface to the other.

As shown in FIG. 7, a horizontal straight-line K1 at the upper end of the first flange portion 111A of the first lens 111 in contact with the lens barrel may be disposed in the boundary portion M1 between the vertical outer surface S51 and the inclined surface S52. Since thermal expansion proceeds in the horizontal downward direction due to the convex first surface S1 of the first lens 111 and the concave second surface S2 of the first lens 111 with respect to the straight-line K1, the boundary portion M1 and the straight-line K1 may overlap each other. In the second flange portion 113A of the second lens 113, the horizontal straight-line K2 at the upper end in contact with the lens barrel may be located higher than the boundary portion M2 between the vertical outer surface S53 and the inclined surface S54. Since thermal expansion of the second lens 113 proceeds in the horizontal upward direction due to the concave third surface S3 of the second lens 113 and the convex fourth surface S4 of the second lens 113, the straight-line K2 may be located higher than the boundary portion M2.

As shown in FIG. 8, a horizontal straight-line K3 at the upper end of in contact with the lens barrel may be located higher than the boundary portion M3 between the vertical outer surface S55 and the inclined surface S56. Since the thermal expansion of the third lens 115 having the convex fifth surface S5 and the concave sixth surface S6 and having one or more inflection points proceeds in the horizontal direction, so the straight-line K3 may be located above the boundary portion M3.

As shown in FIG. 9, based on a straight-line Lz3 perpendicular to the outer surface of the lower end 507 of the lens barrel 500, the first support portion 501 has a first depth G1, the second support portion 503 has a second depth G2, and the third support portion 505 may have a third depth G3. The depths may have a relationship of G1 > G2 > G3.

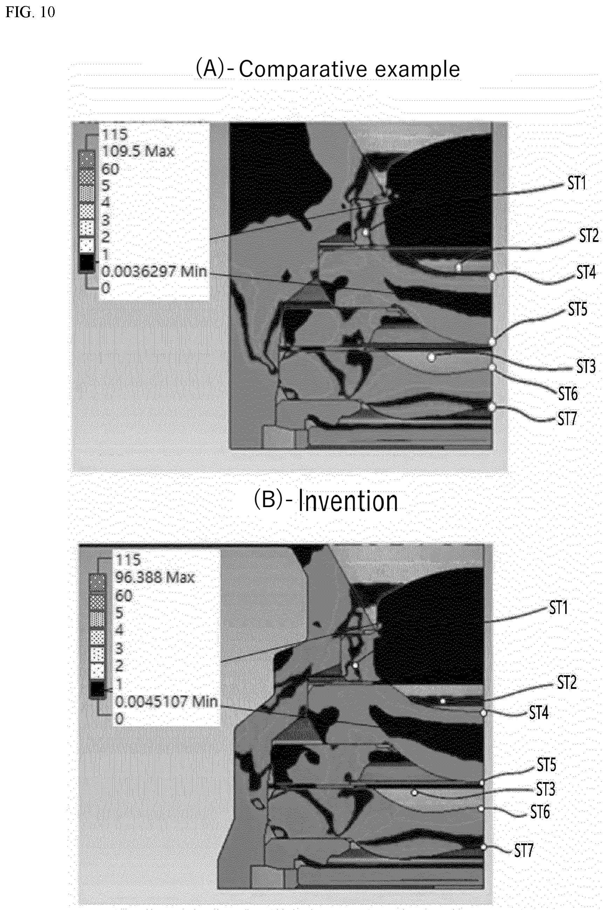

FIG. 10 is a view showing the stress (unit, Mpa) of the comparative example and the invention. In the comparative example of FIG. 10(A), the outer side surfaces of the flange portions of the first, second, and third lenses may provide vertical surface and have a structure in contact with the inner surface of the lens barrel. FIG. 10(B) is an example of contact between the flange portions 111A, 113A, and 115A of the first, second, and third lenses of FIGS. 1 to 3 and the inner sidewall 511 of the lens barrel 500.

In FIG. 10(A)(B), at the outer side ST1 of the first flange, the periphery ST2 of the optical axis of the third surface S3 of the second lens, and the periphery ST3 of the optical axis of the fifth surface of the third lens, it may be seen that the stress values of the comparative example and the invention are more different around the optical axis than the optical axes ST4, ST5, ST6, and ST7. When the distribution of stress is shown, ST1 is 3.3, ST2 is 3,4, and ST3 is 4.6 in FIG. 10(B) of the invention, and in FIG. 10(B) of the comparative example, ST1 is 5.0, ST2 is 4.8, ST3 is 5.2, and it may be seen that the stress value of the invention is lower than that of the comparative example. In addition, it may be seen that the stress of the invention is lower than the stress of the comparative example based on the second lens.

FIG. 11 is a view showing the deformation rate (unit, µm/µm) of the comparative example and the invention. As a comparison of strain values in the optical axis periphery SN1, SN2, and SN3 in FIG. 11(A)(B), it may be seen that the invention is lower than the comparative example. In addition, it may be seen that there is no difference in the values of strain at the optical axis positions SN4, SN5, SN6, and SN7 of each lens at each position of the comparative example and the invention. In the strain rate of each lens, SN1 is 1.06, SN2 is 1.41, and SN3 is 2.2 in FIG. 11(B) of the invention, and SN5 is 1.5, SN2 is 1.6, and SN3 is 2.7 in FIG. 11(A) of the comparative example.

In the optical system according to the first embodiment of the invention, the angle (diagonal) of view may be 70 degrees or less, for example, in the range of 50 degrees to 70 degrees. In the optical system, the distance TTL between the image sensor 190 and the apex of the first lens 111 may be 11 mm or less, and the wavelength of the light used may be in the range of 870 nm to 1000 nm. FIG. 12 (A)(B) is a graph showing the diffraction MTF (Modulation transfer function) at high temperature in the optical system of the comparative example and the optical system of the invention, the MTF decrease of the spatial frequency of the invention may be seen that is less than 30% than the comparative example.

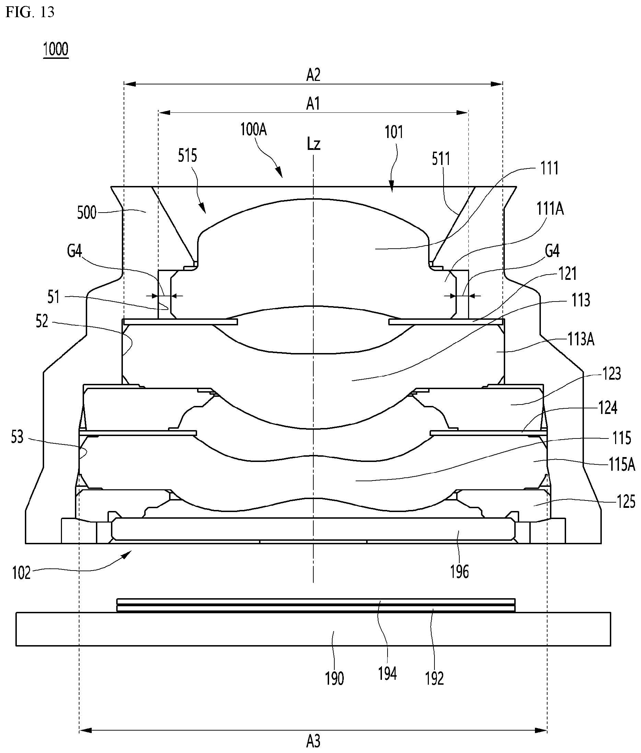

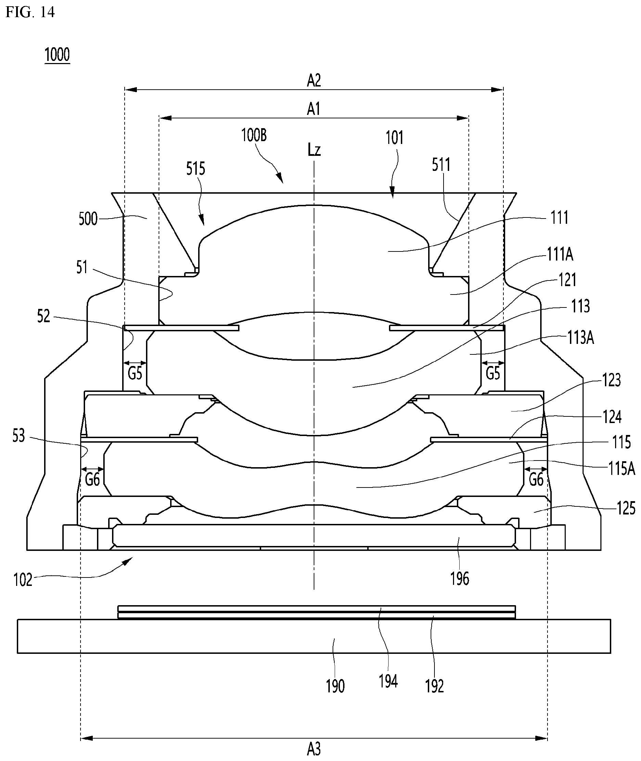

FIGS. 13 to 14 are side cross-sectional views illustrating a camera module according to a second embodiment. In detail, FIG. 13 is a cross-sectional view showing the state of the camera module at a second temperature that is higher than the first temperature of the camera module of FIG. 1, and FIG. 14 is a cross-sectional view showing the state of the camera module at a third temperature that is lower than the first temperature. In describing the second embodiment, the same configuration as that of the first embodiment may include the description of the first embodiment disclosed above.

The lenses of the lens part 100 accommodated in the lens barrel 200 may be disposed adjacent to the inner sidewall 511. In detail, the lenses of the lens part 100 accommodated in the lens barrel 200 may be disposed in contact with the inner sidewall 511 or spaced apart from each other within a range in consideration of tolerance. The lens barrel 500 may include metal or plastic. The coefficient of thermal expansion indicates a change in the size of an object with respect to a change in temperature, and may be defined as a one-dimensional coefficient of linear expansion, a two-dimensional coefficient of surface expansion, and a three-dimensional coefficient of volume expansion according to standards. The lens barrel 500 may have a coefficient of linear expansion (CTE) in various ranges depending on a material forming the barrel. The coefficient of linear expansion is an intrinsic property of a material, and the lens barrel 500 may have a coefficient of linear expansion in various ranges depending on the material forming the lens barrel 500. For example, the lens barrel 500 may have a coefficient of linear expansion of 100 ppm/°C or less. In detail, the lens barrel 500 may have a coefficient of linear expansion of 80 ppm/°C or less. In more detail, the lens barrel 500 may have a coefficient of linear expansion of 10 ppm/°C to 80 ppm/°C.

The coefficient of linear expansion of the lens barrel 500 may be the same as or different from the coefficient of linear expansion of the lens of the lens part 100. When the coefficient of linear expansion of the lens barrel 500 and the coefficient of linear expansion of the lens of the lens part 100 are different from each other, the deformation amount of the lens of the lens barrel 500 and the lens part 100 according to the temperature change may vary. Accordingly, a gap may occur between the lenses of the lens part 100 accommodated in the lens barrel 500 and the lens barrel 500 by the difference in the amount of deformation. That is, the lenses are spaced apart from the side sidewall portion of the lens barrel 500 due to a difference in the expansion or shrinkage amount between the lenses and the lens barrel 500 and the lenses, so that a gap may occur between the lenses and the inner sidewall 511 of the lens barrel 500. As a result, the lens part may be de-centered, thereby deteriorating optical characteristics of the camera module. Accordingly, the camera module may set the linear expansion coefficient of the lens barrel 500 capable of minimizing the decentering of the lens part defined as a gap between the inner sidewall 511 of the lens barrel 500 and the lenses.

The coefficient of linear expansion of the lens barrel 500 will be described in detail below.

The lens part 100 may include a plurality of lenses. In detail, the lens part 100 may include a plurality of lenses sequentially disposed in the lens barrel 500. The lens part 100 may include at least three or more lenses. The number of lenses of the lens part 100 included in the camera module 1000 may vary according to an apparatus and environment to which the camera module including the camera module 1000 is applied.

As shown in FIGs. 13 and 14, the lens part 100 includes a total of three lenses: a first lens 111, a second lens 113, and a third lens 115, but the lens part 100 of the second embodiment is not limited to three lenses, and may include two or more or three or more lenses. For example, the lens part 100 may include a plurality of lenses having different coefficients of linear expansion. When the lens part 100 includes two lenses, each lens may have a different coefficient of linear expansion. Alternatively, when the lens part 100 includes three or more lenses, each lens may have a different coefficient of linear expansion. Alternatively, when the lens part 100 includes three or more lenses, some of the three or more lenses may have the same coefficient of linear expansion and the other lenses may have different coefficient of linear expansion.

Hereinafter, for convenience of explanation, the lens part 100 will be mainly described including the first lens 111, the second lens 113, and the third lens 115. That is, the lens part 100 includes three or more lenses, and a case will be mainly described in which each lens has different coefficient of linear expansion, or some of the three or more lenses have the same coefficient of linear expansion and the remaining lenses have different coefficient of linear expansion. The first lens 111, the second lens 113, and the third lens 115 may be sequentially disposed along the optical axis LZ of the camera module 1000. For example, the first lens 111, the second lens 113, and the third lens 115 may be arranged sequentially inside the lens barrel 500 based on the movement direction of light moving along the optical axis LZ.

Each of the first to third lenses 111, 113, and 115 may have first to third effective regions, and may have first to third ineffective regions outside the first to third effective regions. The first to third ineffective regions may be regions of the first to third flange portions 111A, 113A, and 115. The first flange portion 111A, which is a first ineffective region of the first lens 111, may contact the first inner sidewall 51 of the lens barrel 500. The second flange portion 113A, which is a second ineffective region of the second lens 113, may contact the second inner sidewall 52 of the lens barrel 500. The third flange portion 115A of the third lens 115 may be in contact with the third inner sidewall 53 of the lens barrel 500.

The first lens 111, the second lens 113, and the third lens 115 may include at least one of glass and plastic. For example, the first lens 111, the second lens 113, and the third lens 115 may all be glass lenses, all plastic lenses, or include both glass lenses and plastic lenses. Hereinafter, for convenience of description, the first lens 111 is a lens made of a glass material, and the second lens 113 and the third lens 115 are described as a lens made of a plastic material.

The first lens 111, the second lens 113, and the third lens 115 may have a coefficient of linear expansion (CTE) in various set ranges according to a material forming the lens. That is, the first lens 111, the second lens 113, and the third lens 111 according to materials forming the first lens 111, the second lens 113, and the third lens 115 may have a coefficient of linear expansion within a set range. In detail, the coefficient of linear expansion of the first lens 111 that is a glass lens may be different from the coefficient of linear expansion of the second lens 113 and the third lens 115 that are plastic lenses. The coefficient of linear expansion of the second lens 113 which is the plastic lens and the coefficient of linear expansion of the third lens 115 may be the same or different. That is, even if both the second lens 113 and the third lens 115 are made of plastic, the linear expansion of the second lens 113 and the third lens 115 depends on the composition of the resin composition forming the plastic. The coefficients may be the same or different from each other.

The first lens 111, the second lens 113, and the third lens 115 may have a coefficient of linear expansion greater than 0 ppm/°C and less than or equal to 100 ppm/°C. In detail, the first lens 111, the second lens 113, and the third lens 115 may have a coefficient of linear expansion of greater than 0 ppm/°C and less than or equal to 80 ppm/°C. In more detail, the first lens 111, the second lens 113, and the third lens 115 may have a coefficient of linear expansion of 5 ppm/°C to 80 ppm/°C.

As previously explained. The lens barrel 500, the first lens 111, the second lens 113, and the third lens 115 may have the same or different coefficient of linear expansion. For example, the lens barrel 500 may have a coefficient of linear expansion different from that of at least one of the first lens 111, the second lens 113, and the third lens 115. Accordingly, deformation amounts of the lens barrel 500, the first lens 111, the second lens 113, and the third lens 115 according to the temperature change may vary. For example, in the case of a first mode in which the temperature of the camera module changes from the first temperature to the second temperature as shown in FIG. 13, a space between the first lens 111 and the first inner sidewall 51 may be spaced apart by a first interval G4. In this case, the first mode may be defined as a mode that changes from the first temperature to the second temperature that is higher than the first temperature. In this case, the first temperature may be room temperature and may be defined as 20°C to 30°C, and the second temperature may be defined as a high temperature of 80°C to 105°C. For example, the first temperature may be 25 °C, the second temperature may be 105 °C.

The amount of expansion and shrinkage of the lens barrel 500 may be defined by Equation 1 above. [Formula 1] 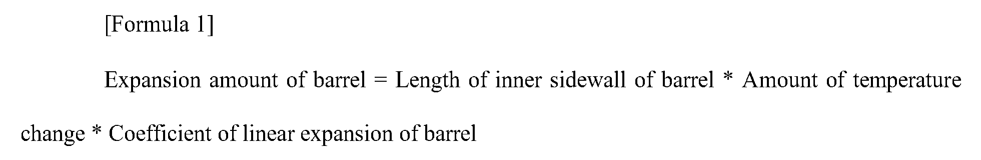 Expansion amount of barrel = Length of inner sidewall of barrel * Amount of temperature change * Coefficient of linear expansion of barrel 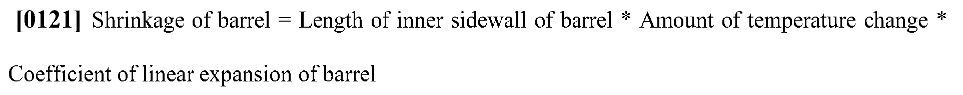Shrinkage of barrel = Length of inner sidewall of barrel * Amount of temperature change * Coefficient of linear expansion of barrel

In Equation 1, the length of the inner sidewall of the barrel may be defined as the short width length (e.g., inner diameter length of the barrel) of the inner sidewall of the lens barrel, and * indicates multiplication in the specification.

The lens expansion and shrinkage amount of the lens part 100 may be defined by Equation 2 below. [Equation 2] 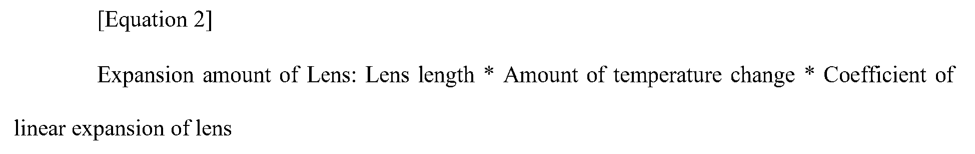 Expansion amount of Lens: Lens length * Amount of temperature change * Coefficient of linear expansion of lens

Lens shrinkage: Lens length * Amount of temperature change * Coefficient of linear expansion of lens

In Equation 2, the length of the lens includes an effective region and an ineffective region of the lens, and may be defined as a diameter of the lens in a direction parallel to the length of the inner sidewall of the lens barrel.

When the temperature of the camera module changes from the first temperature to the second temperature, which is a high temperature, the lenses and the lens barrel 500 may expand by the sizes of Equations 1 and 2, respectively. In this case, when the coefficient of linear expansion of the glass material is smaller than the coefficient of linear expansion of the lens barrel 500, the expansion amount of the lens barrel 500 may be greater than the expansion amount of the first lens 111 including the glass material. Accordingly, when the temperature of the camera module changes from the first temperature to the second temperature, the first lens 111 and the first inner sidewall 51 may be spaced apart by a first interval G4.

As shown in FIG. 14, in a second mode in which the temperature of the camera module changes from the first temperature to the third temperature, which is a low temperature, a space between the second lens 113 and the second inner sidewall 52 may be spaced apart by a second interval G5, and a space between the third lens 115 and the third inner sidewall 53 may be spaced apart by a third interval G6. In this case, the second mode may be defined as a mode that changes from the first temperature to a third temperature that is lower than the first temperature. The first temperature may be defined as 20 °C to 30 °C, and the third temperature is a low temperature and may be defined as -40 °C to -30 °C. For example, the first temperature may be 25 °C, the third temperature may be -40 °C.

When the camera module changes from the first temperature to the third temperature, the lenses and the lens barrel 500 may be shrank by the sizes of Equations 1 and 2, respectively. At this time, when the coefficient of linear expansion of the plastic is greater than the coefficient of linear expansion of the lens barrel 500, the shrinkage of the lens barrel 500 may be smaller than the shrinkage of the second lens 113 and the third lens 115 containing plastic. Accordingly, when the temperature of the camera module changes from the first temperature to the third temperature, the second lens 113 and the second inner sidewall 52 may be spaced apart by the second interval G5. The third lens 115 and the third inner sidewall 53 may be spaced apart by the third interval G6.

When the optical module changes from the first temperature to the second temperature or the third temperature, the first lens 111, the second lens 113 and an interval may occur a space between the first lens 111, the second lens 113 and the third lens 115 and the inner sidewall 511 of the lens barrel 500 by a difference in the amount of deformation, and the first lens 111, second lens 113 and third lens 115 may be de-centered by a size of the interval, so that the optical characteristics of the camera module may be deteriorated. In the camera module according to the embodiment, the coefficient of linear expansion and size of the first lens 111, the second lens 113, and the third lens 115 may be set to minimize the decentering of the first lens 111, the second lens 113, and the third lens 115. The coefficient of linear expansion and sizes of the first lens 111, the second lens 113, and the third lens 115 will be described in detail below.

Hereinafter, a size of a lens capable of minimizing the decentering of the camera module 1000, and a coefficient of linear expansion of the lens and the barrel will be described. The coefficient of linear expansion of the first lens 111, the second lens 113, and the third lens 115 may be the same or different. In detail, the coefficient of linear expansion of the first lens 111 may be different from the coefficient of linear expansion of the second lens 113 and the coefficient of linear expansion of the third lens 115. That is, since the first lens 111 includes a material different from that of the second lens 113 and the third lens 115, the coefficient of linear expansion of the first lens 111 may be different from the coefficient of linear expansion of the second lens 113 and the coefficient of linear expansion of the third lens 115. The coefficient of linear expansion of the second lens 113 and the coefficient of linear expansion of the third lens 115 may be the same or different. For example, when the second lens 113 and the third lens 115 include a composition having the same composition and composition ratio, the coefficient of linear expansion of the second lens 113 and the third lens 115 may have the same coefficient of linear expansion. In addition, when the second lens 113 and the third lens 115 include a composition having a different composition or a different composition ratio, the coefficient of linear expansion of the second lens 113 and the coefficient of linear expansion of the third lens 115 may be different.

The first lens 111 may have a coefficient of linear expansion within a set range. In detail, the first lens 111 may have a coefficient of linear expansion of 20 ppm/°C or less. In more detail, the first lens 111 may have a coefficient of linear expansion of greater than 0 ppm/°C to 15 ppm/°C. In more detail, the first lens 111 may have a coefficient of linear expansion of greater than 0 ppm/°C to 10 ppm/°C. Since the first lens 111 includes glass, it may be difficult to realize that the coefficient of linear expansion of the first lens 111 exceeds 20 ppm/°C due to the characteristics of the material. In addition, when the coefficient of linear expansion of the first lens 111 exceeds 20 ppm/°C, the refractive index, Abbe number, etc. of the first lens 111 disposed closest to the object in the camera module are changed, so that the camera module optical properties may be deteriorated.

The second lens 113 may have a coefficient of linear expansion within a set range. In detail, the second lens 113 may have a coefficient of linear expansion of 80 ppm/°C or less. In more detail, the second lens 113 may have a coefficient of linear expansion of 40 ppm/°C to 70 ppm/°C. In more detail, the second lens 113 may have a coefficient of linear expansion of 50 ppm/°C to 60 ppm/°C. Since the second lens 113 includes plastic, it may be difficult to realize that the coefficient of linear expansion of the second lens 113 exceeds 80 ppm/°C due to the characteristics of the material. In addition, when the coefficient of linear expansion of the second lens 113 exceeds 80 ppm/°C, the refractive index, Abbe's number, etc. of the second lens 113 disposed between the first lens 111 and the third lens 115 in the camera module are changed, and optical characteristics of the camera module may be deteriorated. The third lens 115 may have a coefficient of linear expansion within a set range. In detail, the third lens 115 may have a coefficient of linear expansion of 80 ppm/°C or less. In more detail, the third lens 115 may have a coefficient of linear expansion of 40 ppm/°C to 70 ppm/°C. In more detail, the third lens 115 may have a coefficient of linear expansion of 50 ppm/°C to 60 ppm/°C.

The second lens 113 and the third lens 115 may have the same coefficient of linear expansion within the set range. Alternatively, the second lens 113 and the third lens 115 may have different coefficients of linear expansion within the set range. Since the third lens 115 includes plastic, it may be difficult to realize that the coefficient of linear expansion of the third lens 115 exceeds 80 ppm/°C due to the characteristics of the material. In addition, when the coefficient of linear expansion of the third lens 115 exceeds 80 ppm/°C, the refractive index and Abbe number of the third lens 115 disposed closest to the image sensor 192 in the camera module etc. may be changed, and the optical characteristics of the camera module may be deteriorated.

The first lens 111, the second lens 113, and the third lens 115 may have a size within a set range. In detail, the first lens 111, the second lens 113, and the third lens 115 may have a lens diameter within a set range. Here, the lens diameters of the first lens 111, the second lens 113, and the third lens 115 may be defined as diameters including all of the effective and ineffective regions of each lens. In detail, the diameter of the first lens 111 may be defined as the sum of the diameter of the first effective region and the diameter of the first flange portion, and the diameter of the second lens 113 may be defined as the sum of the diameter of the second effective region and the diameter of the second flange portion. The diameter of the third lens 115 may be defined as the sum of the diameter of the third effective region and the diameter of the third flange portion.

The diameter A1 of the first lens 111 may be 5 mm or less. In detail, the diameter A1 of the first lens 111 may be 3 mm to 5 mm. In more detail, the diameter A1 of the first lens 111 may be 3.2 mm to 4.4 mm. When the diameter A1 of the first lens 111 exceeds 5 mm, the amount of expansion or shrinkage of the first lens 111 is increased at a high temperature or a low temperature due to an increase in the diameter of the first lens 111. Accordingly, a region in which the first lens 111 is spaced apart from the sidewall of the lens barrel 500 may be increased. As a result, the overall de-center of the camera module may be increased, so that optical characteristics of the camera module may be deteriorated.

The diameter A2 of the second lens 113 may be 10 mm or less. In detail, the diameter A2 of the second lens 113 may be 3 mm to 9 mm. In more detail, the diameter A2 of the second lens 113 may be 4.5 mm to 8 mm. When the diameter A2 of the second lens 113 exceeds 10 mm, the amount of expansion or shrinkage of the second lens 113 is increased at a high temperature or a low temperature due to an increase in the diameter of the second lens 113. Accordingly, a region in which the second lens 113 is spaced apart from the sidewall of the lens barrel 500 may be increased. As a result, the overall de-center of the camera module may be increased, so that optical characteristics of the camera module may be deteriorated.

A diameter A3 of the third lens 115 may be 10 mm or less. In detail, the diameter A3 of the third lens 115 may be 3 mm to 9 mm. In more detail, the diameter A3 of the third lens 115 may be 4.5 mm to 8 mm. When the diameter A3 of the third lens 115 exceeds 10 mm, the amount of expansion or shrinkage of the third lens 115 is increased at a high temperature or a low temperature due to an increase in the diameter of the third lens 115. Accordingly, a region in which the third lens 115 is spaced apart from the sidewall of the lens barrel 500 may be increased. As a result, the overall de-center of the camera module may be increased, so that optical characteristics of the camera module may be deteriorated.

The diameters of the second lens 113 and the third lens 115 may be the same within the set range. Alternatively, the diameters of the second lens 113 and the third lens 115 may be different within the set range. That is, the second lens 113 and the third lens 115 may have the same or different diameters in consideration of optical characteristics of the camera module.

The coefficient of linear expansion of the lens barrel 500 may be different from the coefficient of linear expansion of the first lens 111, the second lens 113, and the third lens 115. In detail, the coefficient of linear expansion of the lens barrel 500 may be greater than the coefficient of linear expansion of the first lens 111. In addition, the coefficient of linear expansion of the lens barrel 500 may be equal to or smaller than the coefficient of linear expansion of the second lens 113 and the coefficient of linear expansion of the third lens 115. Accordingly, when the camera module changes from room temperature to high temperature, the expansion amount of the lens barrel 500 becomes greater than the expansion amount of the first lens 111, so that the first lens 111 may be spaced apart from the first inner sidewall 51 of the lens barrel 500. When the camera module changes from room temperature to low temperature, the shrinkage amount of the lens barrel 500 becomes smaller than the shrinkage amount of the second lens 111 and the third lens 115, so that the second lens 113 may be spaced apart from the second inner sidewall 52 of the lens barrel 500, and the third lens 113 may be spaced apart from the third inner sidewall 53 of the lens barrel 500.

The lens barrel 500 may be determined according to the coefficient of linear expansion of the lenses and the diameters of the lenses described above. In detail, the coefficient of linear expansion of the lens barrel 500 may have a coefficient of linear expansion of 60 ppm/°C or less in consideration of the coefficient of linear expansion of the lenses and the diameter of the lenses described above. In more detail, when the coefficient of linear expansion of the first lens is greater than 0 ppm/°C to 20 ppm/°C, and the coefficients of linear expansion of the second lens and the third lens are from 50 ppm/°C to 60 ppm/°C, and the coefficient of the linear expansion of the lens barrel 500 may have a coefficient of linear expansion of 29 ppm/°C to 60 ppm/°C. In more detail, the coefficient of linear expansion of the lens barrel 500 may have a coefficient of linear expansion of 29 ppm/°C to 50 ppm/°C. In more detail, the coefficient of linear expansion of the lens barrel 500 may have a coefficient of linear expansion of 36 ppm/°C to 50 ppm/°C. In more detail, when the coefficient of linear expansion of the first lens is greater than 0 ppm/°C to 10 ppm/°C, and the coefficients of linear expansion of the second and third lenses are from 50 ppm/°C to 60 ppm/°C, the coefficient of the linear expansion of the lens barrel 500 may have a coefficient of linear expansion of 31 ppm/°C to 60 ppm/°C. In more detail, the coefficient of linear expansion of the lens barrel 500 may have a coefficient of linear expansion of 39 ppm/°C to 60 ppm/°C. In more detail, the coefficient of linear expansion of the lens barrel 500 may have a coefficient of linear expansion of 46 ppm/°C to 50 ppm/°C.

When the diameter of the first lens is 4.3 mm and the diameter of the second lens and the third lens is 6.5 mm, the range of the coefficient of linear expansion of the lens barrel 500 may be a range according to the size of the coefficient of the linear expansion of the first lens to the third lens. The embodiment is not limited thereto, and the coefficient of linear expansion of the lens barrel may have various ranges according to the diameters of the first to third lenses and the coefficient of linear expansion of the first to third lenses. That is, in the camera module, the linear expansion coefficient of the barrel may be set to minimize the decentering of the lenses considering that the first lens 111 has a coefficient of linear expansion of 20 ppm/°C or less, the second lens 113 has a coefficient of linear expansion of 60 ppm/°C or less, and the third lens 115 has a coefficient of linear expansion of 60 ppm/°C or less, the diameter of the first lens 111 is 5 mm or less, the diameter of the second lens 113 is 10 mm or less, and the third lens 115 is 10 mm or less. In detail, in the camera module, the range of the linear expansion coefficient of the lens barrel 500 may be set such that the first interval G4 of the first lens 111 is adjusted to be 0 µm or more and 18 µm or less, the second interval G5 of the second lens 113 is adjusted to be 0 µm or more and 9 µm or less, and the third interval G6 of the third lens 115 is adjusted to be 0 µm or more and 9 µm or less. In more detail, in the camera module, the range of the linear expansion coefficient of the lens barrel 500 may be set such that the first interval G4 of the first lens 111 may be adjusted to be 0 µm to 15 µm, the second interval G5 of the second lens 113 may be adjusted to be 0 µm or more to 15 µm or less, and the third interval G6 of the third lens 115 may be adjusted to be 0 µm or more to 6 µm or less.

When the first interval G4 of the first lens 111 exceeds 18 µm, the optical characteristics may be greatly deteriorated due to the decentering of the lens part 100. In addition, when the second interval G5 of the second lens 113 and the third interval G6 of the third lens 115 exceed 9 µm, the optical properties may be greatly degraded. When the coefficient of linear expansion of the lens barrel 500 exceeds 60 ppm/°C or is less than 29 ppm/°C, the difference in the amount of expansion between the first lens 111 and the lens barrel 500 becomes too large at a high temperature, so that the first interval G4 of the first lens 111 may exceed 18 µm, and the difference in the shrinkage amount between the second lens 113 and the third lens 115 and the lens barrel 500 becomes too large at a low temperature, so that the second interval G5 of the second lens 113 and a third interval G6 of the third lens 115 may exceed 9 µm. Accordingly, the optical characteristics of the camera module 1000 including the lens part 100 may be deteriorated due to an increase in the overall de-center of the lens part 100.

Hereinafter, the second embodiment will be described in detail through the heat dissipation member of the camera module and the thermal characteristics of the heat dissipation member according to the second embodiment and the comparative example. This second embodiment is merely presented as an example in order to explain the invention in more detail. Accordingly, the invention is not limited to the examples disclosed below.

### [Example 1]

The first lens, the second lens, and the third lens were disposed inside the lens barrel. In this case, a gap adjusting member is disposed between the first lens, the second lens, and the third lens to maintain the spaces between the lenses. Then, by changing the temperature of the camera module from 25 °C to a low temperature of -40 °C and a high temperature of 105 °C, the intervals between the inner sidewall 511 of the barrel and the first lens, the second lens and the third lens were observed. In this case, the coefficient of linear expansion of the first lens was 7.3 ppm/°C, the coefficient of linear expansion of the second lens was 60 ppm/°C, and the coefficient of linear expansion of the third lens was 60 ppm/°C. In addition, the diameter of the first lens was 3.2 mm, the diameter of the second lens was 4.8 mm, and the diameter of the third lens was 4.8 mm. Then, while changing the magnitude of the coefficient of linear expansion of the lens barrel, the intervals between the first lens, the second lens, and the third lens and the inner sidewall 511 of the barrel were measured.

### [Example 2]

In the same manner as in Example 1, the intervals between the first lens, the second lens, and the third lens and the inner sidewall 511 of the barrel were measured while changing the magnitude of the coefficient of linear expansion of the lens barrel, except that the diameter of the first lens was 4.39 mm.

### [Example 3]

In the same manner as in Example 1, the intervals between the first lens, the second lens, and the third lens and the inner sidewall 511 of the barrel were measured while changing the magnitude of the coefficient of linear expansion of the lens barrel, except that the diameter of the first lens was 8 mm.

### [Example 4]

In the same manner as in Example 1, the intervals between the first lens, the second lens, and the third lens and the inner sidewall 511 of the barrel were measured while changing the magnitude of the coefficient of linear expansion of the lens barrel, except that the diameter of the first lens was 4.39 mm and the diameters of the second and third lenses were 8 mm.

### [Example 5]

In the same manner as in Example 1, the intervals between the first lens, the second lens, and the third lens and the inner sidewall 511 of the barrel were measured while changing the magnitude of the coefficient of linear expansion of the lens barrel, except that the diameter of the first lens was 4.3 mm and the diameters of the second and third lenses were 6.5 mm.

### [Example 6]

In the same manner as in Example 1, the intervals between the first lens, the second lens, and the third lens and the inner sidewall 511 of the barrel were measured while changing the magnitude of the coefficient of linear expansion of the lens barrel, except that the coefficient of linear expansion of the first lens was 20 ppm/°C, and the coefficients of linear expansion of the second lens and the third lens were 50 ppm/°C.

### [Example 7]

In the same manner as in Example 1, the intervals between the first lens, the second lens, and the third lens and the inner sidewall 511 of the barrel were measured while changing the magnitude of the coefficient of linear expansion of the lens barrel, except that the coefficient of linear expansion of the first lens was 20 ppm/°C, the coefficients of linear expansion of the second and third lenses were 50 ppm/°C, and the diameter of the first lens was 4.39 mm.

### [Example 8]

In the same manner as in Example 1, the intervals between the first lens, the second lens, and the third lens and the inner sidewall 511 of the barrel were measured while changing the magnitude of the coefficient of linear expansion of the lens barrel, except that the coefficient of linear expansion of the first lens was 20 ppm/°C, the coefficients of linear expansion of the second and third lenses were 50 ppm/°C, and the diameters of the second and third lenses were 8 mm.

### [Example 9]

In the same manner as in Example 1, the intervals between the first lens, the second lens, and the third lens and the inner sidewall 511 of the barrel were measured while changing the magnitude of the coefficient of linear expansion of the lens barrel, except that the coefficient of linear expansion of the first lens is 20 ppm/°C, the coefficients of linear expansion of the second lens and the third lens are 50 ppm/°C, the diameter of the first lens is 4.39 mm, and the diameters of the second lens and the third lens were 8 mm.

### [Example 10]

In the same manner as in Example 1, the intervals between the first lens, the second lens, and the third lens and the inner sidewall 511 of the barrel were measured while changing the magnitude of the coefficient of linear expansion of the lens barrel, except that the coefficient of linear expansion of the first lens is 20 ppm/°C, the coefficients of linear expansion of the second lens and the third lens are 50 ppm/°C, the diameter of the first lens is 4.3 mm, the diameters of the second lens and the third lens were 6.5 mm.

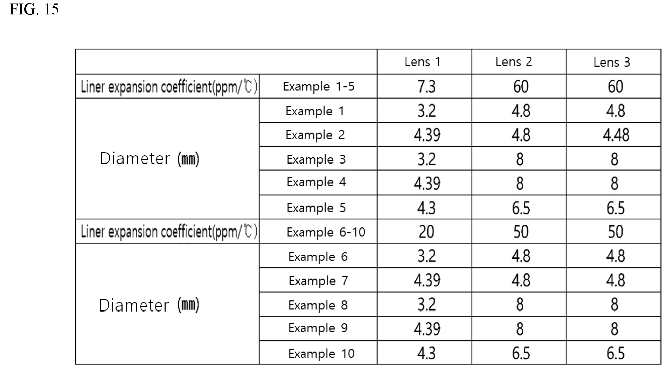

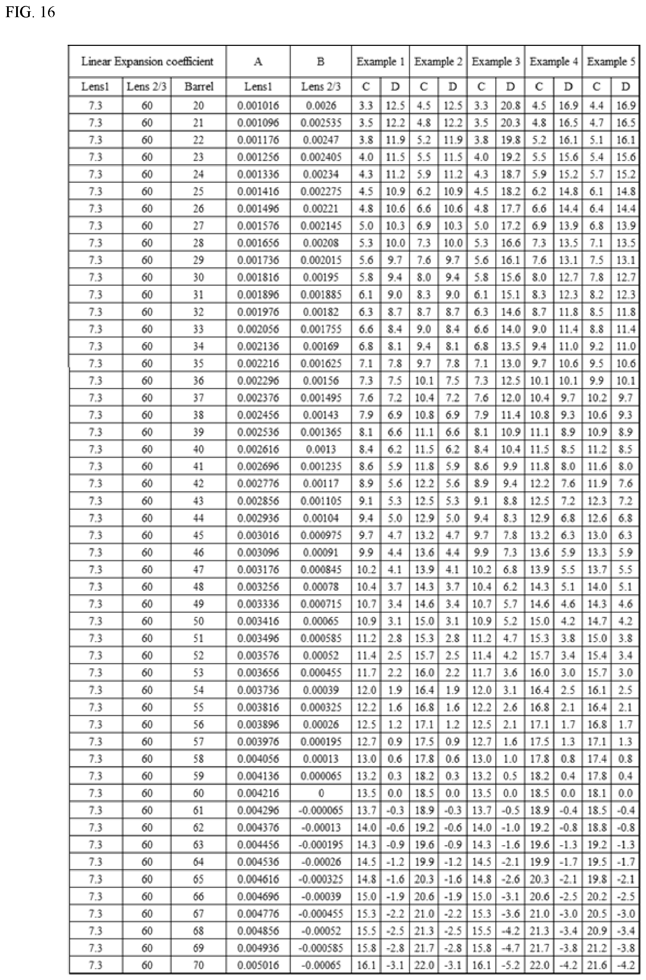

FIG. 15 is a table for explaining coefficient of linear expansion and diameters of first to third lenses according to Examples 1 to 10 of the second embodiment. FIG. 16 shows the values of the expansion and shrinkage amounts of the first, second, and third lenses except for the diameters of the lenses in Examples 1 to 5 of FIG. 15 and shows the intervals between the first lens, the second lens, and the third lens according to the change of the linear expansion coefficient of the lens barrel in consideration of the diameters of the first lens, the second lens, and the third lens in Examples 1 to 5;

In FIG. 16, A means the difference in the degree of expansion of the first lens and the lens barrel when the temperature is changed from 25°C to 105°C, the condition may satisfy: A (mm) = temperature change (°C) * (barrel CTE (10⁻⁶mm/ °C) - CTE (10⁻⁶mm/°C) of the first lens. B means the difference in the degree of shrinkage between each of the second and third lenses and the lens barrel when the temperature changes from 25°C to -40°C and the condition may satisfy: B (mm) = temperature change (°C) * (barrel CTE (10⁻⁶mm/°C) - CTE (10⁻⁶mm/°C) of each of the second and third lens. C means a value obtained by rounding the product of the diameter of the first lens and A to two decimal places, and the condition may satisfy: C (µm) = A * diameter (mm) of the first lens * 10³. D is the 2nd and 3rd lens diameters and It means a value obtained by rounding the product of B means a value obtained by rounding the product of the diameters of the second, third lenses and B to two decimal places, and the condition may be satisfied: D (µm) = B * diameter (mm) of each of second, third lenses * 10³.

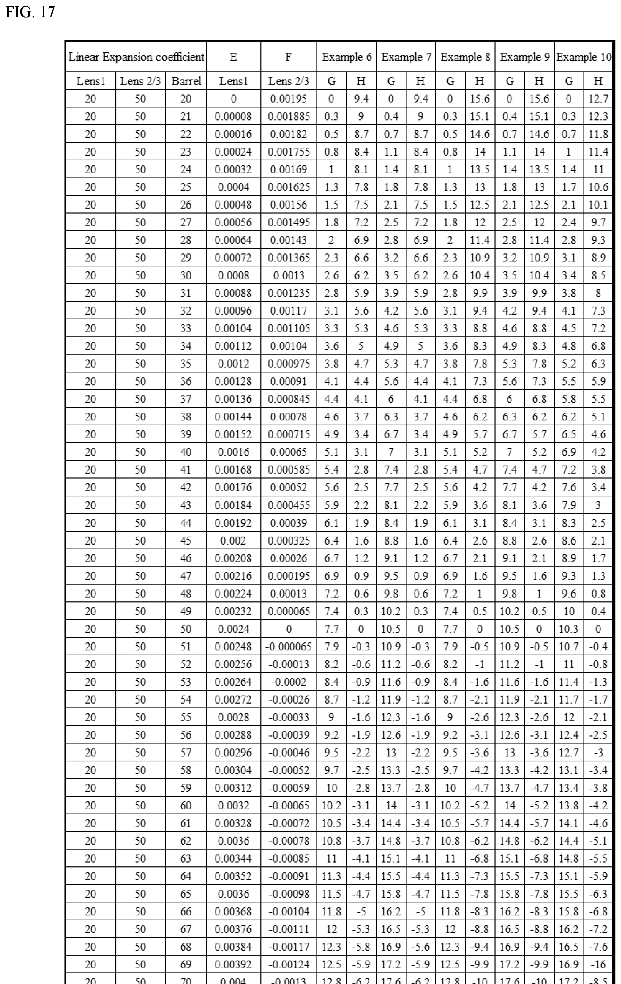

FIG. 17 shows the values of the expansion and shrinkage amounts of the first lens, the second lens, and the third lens except for the diameter of the lens in Examples 6 to 10 of FIG. 15 and shows the intervals between the first lens, the second lens, and the third lens according to the change in the coefficient of linear expansion of the barrel in consideration of the diameter of the first lens, the second lens, and third lens.

In FIG. 17, E means the difference in the degree of expansion of the first lens and the lens barrel when the temperature is changed from 25°C to 105°C, and the condition may satisfy: E(mm) = temperature change (°C) * (barrel CTE (10⁻⁶ mm) /°C) - CTE (10⁻⁶mm/°C) of the first lens. F means the difference in the degree of shrinkage between the second and third lenses and the lens barrel when the temperature changes from 25°C to -40°C, and the condition may satisfy: F(mm) = amount of temperature change (°C) * (barrel CTE (10⁻⁶mm/°C) - CTE (10-6mm/°C) of each of the second and third lenses. G means a value obtained by rounding off product of the diameter of the first lens and E to two decimal places, and the condition may satisfy: G (µm) = E * diameter (mm) of first lens * 10³. H means a value obtained by rounding the product of diameters of the second and third lenses and B to two decimal places, and the condition may satisfy: H (µm) = F * diameter (mm) of each of second and third lenses * 10³.

As shown in FIG. 16, in the case of the camera module according to Example 1, in the first lens, when the coefficient of linear expansion of the lens barrel is 20 ppm/°C to 65 ppm/°C, it may be seen that the interval between the first lens and the lens barrel is 18 µm or less. In the second lens and the third lens, when the coefficient of linear expansion of the lens barrel is 41 ppm/°C to 60 ppm/°C, it may be seen that the intervals between the second lens and the barrel and between the third lens and the lens barrel are 9 µm or less. That is, in the camera module according to Example 1, when the coefficient of linear expansion is 41 ppm/°C to 60 ppm/°C, it may be seen that the first lens, the second lens, and the third lens are set to a decenter that does not affect the optical characteristics.

In the case of the camera module according to Example 2, in the first lens, when the coefficient of linear expansion of the lens barrel is 20 ppm/°C to 50 ppm/°C, it may be seen that the interval between the first lens and the barrel is 18 µm or less. In addition, in the second lens and the third lens, when the coefficient of linear expansion of the lens barrel is 41 ppm/°C to 60 ppm/°C, it may be seen that the intervals between the second lens and between the lens barrel and the third lens are 9 µm or less.

That is, in the camera module according to Example 2, when the coefficient of linear expansion is 41 ppm/°C to 50 ppm/°C, it may be seen that the first lens, the second lens, and the third lens are set to a decenter that does not affect optical properties.

In the case of the camera module according to Example 3, in the first lens, when the coefficient of linear expansion of the lens barrel is 20 ppm/°C to 65 ppm/°C, it may be seen that the interval between the first lens and the barrel is 18 µm or less. In the second lens and the third lens, when the coefficient of linear expansion of the lens barrel is 49 ppm/°C to 60 ppm/°C, it may be seen that the intervals between the second lens and the lens barrel and between the third lens and the lens barrel are 9 µm or less. That is, in the camera module according to Example 3, when the coefficient of linear expansion is 49 ppm/°C to 50 ppm/°C, it may be seen that the first lens, the second lens, and the third lens are set to a decenter that does not affect the optical characteristics.

In the case of the camera module according to Example 4, in the first lens, when the coefficient of linear expansion of the lens barrel is 20 ppm/°C to 50 ppm/°C, it may be seen that the interval between the first lens and the lens barrel is 18 µm or less. In addition, in the second lens and the third lens, when the coefficient of linear expansion of the lens barrel is 49 ppm/°C to 60 ppm/°C, it may be seen that the intervals between the second lens and the lens barrel and between the third lens and the lens barrel are 9 µm or less. That is, in the camera module according to Example 4, when the coefficient of linear expansion is 49 ppm/°C to 50 ppm/°C, it may be seen that the first lens, the second lens, and the third lens are set to a decenter that does not affect optical characteristics.

In the case of the camera module according to Example 5, in the first lens, when the coefficient of linear expansion of the lens barrel is 20 ppm/°C to 60 ppm/°C, it may be seen that the interval between the first lens and the barrel is 0 µm or more and 18 µm or less. In addition, in the second lens and the third lens, when the coefficient of linear expansion of the lens barrel is 39 ppm/°C to 60 ppm/°C, it may be seen that the intervals between the second lens and the lens barrel and between the third lens and the lens barrel are 0 µm or more and 9 µm or less. That is, in the camera module according to Example 5, when the coefficient of linear expansion is 39 ppm/°C to 60 ppm/°C, it may be seen that the first lens, the second lens, and the third lens are set to a decenter that does not affect optical properties. In more detail, in the first lens, when the coefficient of linear expansion of the lens barrel is 20 ppm/°C to 50 ppm/°C, it may be seen that the interval between the first lens and the barrel is 15 µm or less. In the second lens and the third lens, when the coefficient of linear expansion of the lens barrel is 46 ppm/°C to 60 ppm/°C, it may be seen that the intervals between the second lens and the lens barrel and between the third lens and the lens barrel are 5 µm or less. That is, in the camera module according to Example 5, when the coefficient of linear expansion is 46 ppm/°C to 50 ppm/°C, it may be seen that the first lens, the second lens, and the third lens are set to a decenter that does not affect optical properties.

Referring to FIG. 17, in the case of the camera module according to Example 6, in the first lens, when the coefficient of linear expansion of the lens barrel is 20 ppm/°C to 70 ppm/°C, it may be seen that the interval between the first lens and the lens barrel is 18 µm or less. In addition, in the second lens and the third lens, when the coefficient of linear expansion of the lens barrel is 31 ppm/°C to 50 ppm/°C, it may be seen that the intervals between the second lens and the lens barrel and between the third lens and the lens barrel are 9 µm or less. That is, in the camera module according to Example 6, when the coefficient of linear expansion is 31 ppm/°C to 50 ppm/°C, it may be seen that the first lens, the second lens, and the third lens are set to a decenter that does not affect optical properties.

In the case of the camera module according to Example 7, in the first lens, when the coefficient of linear expansion of the lens barrel is 20 ppm/°C to 62 ppm/°C, it may be seen that the interval between the first lens and the lens barrel is 18 µm or less. In the second lens and the third lens, when the coefficient of linear expansion of the lens barrel is 31 ppm/°C to 50 ppm/°C, it may be seen that the intervals between the second lens and the lens barrel and between the third lens and the lens barrel is 9 µm or less. That is, in the camera module according to Example 7, when the coefficient of linear expansion is 31 ppm/°C to 50 ppm/°C, the first lens, the second lens, and the third lens are set to a decenter that does not affect the optical characteristics.

In the case of the camera module according to Example 8, in the first lens, when the coefficient of linear expansion of the lens barrel is 20 ppm/°C to 70 ppm/°C, it may be seen that the interval between the first lens and the barrel is 18 µm or less. In addition, in the second lens and the third lens, when the coefficient of linear expansion of the lens barrel is 39 ppm/°C to 50 ppm/°C, the intervals between the second lens and the lens barrel and between the third lens and the lens barrel are 9 µm or less. That is, in the camera module according to Example 8, when the coefficient of linear expansion is 39 ppm/°C to 50 ppm/°C, it may be seen that the first lens, the second lens, and the third lens are set to a decenter that does not affect the optical characteristics.

In the case of the camera module according to Example 9, in the first lens, when the coefficient of linear expansion of the lens barrel is 20 ppm/°C to 62 ppm/°C, it may be seen that the interval between the first lens and the lens barrel is 18 µm or less. In the second lens and the third lens, when the coefficient of linear expansion of the lens barrel is 39 ppm/°C to 50 ppm/°C, it may be seen that the intervals between the second lens and the lens barrel and between the third lens and the lens barrel is 9 µm or less. That is, in the camera module according to Example 9, when the coefficient of linear expansion is 39 ppm/°C to 50 ppm/°C, it may be seen that the first lens, the second lens, and the third lens are set to a decenter that does not affect the optical characteristics.

In the case of the camera module according to Example 10, in the first lens, when the coefficient of linear expansion of the lens barrel is 20 ppm/°C to 70 ppm/°C, it may be seen that the interval between the first lens and the lens barrel is 18 µm or less. there is. In addition, in the second lens and the third lens, when the coefficient of linear expansion of the lens barrel is 29 ppm/°C to 50 ppm/°C, it may be seen that the intervals between the second lens and the lens barrel and between the third lens and the lens barrel are 9 µm or less. That is, in the camera module according to Example 10, when the coefficient of linear expansion is 29 ppm/°C to 50 ppm/°C, it may be seen that the first lens, the second lens, and the third lens are set to a decenter that does not affect optical properties. In more detail, in the first lens, when the coefficient of linear expansion of the lens barrel is 20 ppm/°C to 63 ppm/°C, the interval between the first lens and the lens barrel is 15 µm or less. In addition, in the second lens and the third lens, when the coefficient of linear expansion of the lens barrel is 36 ppm/°C to 50 ppm/°C, it may be seen that the intervals between the second lens and the lens barrel and between the third lens and the lens barrel are 5 µm or less. That is, in the camera module according to Example 10, when the coefficient of linear expansion is 36 ppm/°C to 50 ppm/°C, it may be seen that the first lens, the second lens, and the third lens are set to a decenter that does not affect optical properties.

The camera module according to the second embodiment may set the coefficient of linear expansion of the barrel capable of minimizing the decentering of the lenses according to the materials and diameters of the lenses. In detail, the coefficient of linear expansion, which is an intrinsic property of the material, may be different for each material of the lenses. At this time, when the camera module changes to a high temperature state or a low temperature state due to the difference in the coefficient of linear expansion between the lenses included in the camera module and the coefficient of linear expansion between the lens and the barrel, a decentering may occur in which the lenses are spaced apart from the inner sidewall 511 of the lens barrel due to the difference between the expansion amount and the shrinkage amount. Accordingly, in consideration of the size range of the coefficient of linear expansion of each lens and the diameter size of the lenses according to the materials of the lenses, the size of the difference in the expansion amount and the shrinkage amount between the lens and the barrel may be controlled. That is, in the camera module according to the embodiment, the size range of the linear expansion coefficient of the barrel may be set in a range where the decentering generated in the high temperature and low temperature states of the camera module does not significantly affect the optical properties. Accordingly, since the camera module is set to have the set linear expansion coefficient of the lenses and the set diameter of the lens, the lens de-center may be adjusted in a decenter range where the camera module does not significantly affect the optical properties in a high temperature state and a low temperature state. Accordingly, since the camera module according to the second embodiment minimizes the decenter range even in a high temperature state and a low temperature state, it is possible to maintain uniform operating performance in both the room temperature, the high temperature and the low temperature state.

Below, a camera module according to a third embodiment will be described with reference to FIGs. 1, 13 and 14.

FIG. 1 is a view showing a cross-sectional view of the camera module at a first temperature, FIG. 13 is a view showing a cross-sectional view of the camera module at a second temperature that is higher than the first temperature, and FIG. 14 is a view showing a cross-sectional view of the camera module at the third temperature that is lower than the first temperature. In describing the third embodiment, the components disclosed above may be included in the third embodiment.

The first temperature may be a room temperature, the second temperature may be a high temperature, and the third temperature may be a low temperature. In this case, the first temperature may be 20 °C to 30 °C, the second temperature may be 80 °C to 105 °C, and the third temperature may be - 40 °C to -30 °C. For example, the first temperature may be 25 °C, the second temperature may be 105 °C, the third temperature may be -40 °C. For example, the lens barrel 500 may have a coefficient of linear expansion of 100 ppm/°C or less. In detail, the lens barrel 500 may have a coefficient of linear expansion of 80 ppm/°C or less. In more detail, the lens barrel 500 may have a coefficient of linear expansion of 10 ppm/°C to 80 ppm/°C. In more detail, the lens barrel 500 may have a coefficient of linear expansion of 10 ppm/°C to 70 ppm/°C.

The coefficient of linear expansion of the lens barrel 500 may be the same as or different from the coefficient of linear expansion of the lens of the lens part 100. When the coefficient of linear expansion of the lens barrel 500 and the coefficient of linear expansion of the lens of the lens part 100 are different from each other, the deformation amount of the lens of the lens barrel 500 and the lens part 100 according to the temperature change may vary. That is, the lenses of the lens barrel 500 and the lens part 100 may shrink or expand as the temperature changes. For example, the lenses of the lens barrel 500 and the lens part 100 may expand or shrink when the temperature changes from the first temperature to the second temperature, and the temperature changes from the first temperature to the third temperature. Since the lens barrel 500 and the lens of the lens part 100 have different sizes of coefficient of linear expansion, which are inherent characteristics of materials, the degree of expansion and shrinkage at the second temperature and the third temperature may be different. Accordingly, an interval between the lenses of the lens part 100 accommodated in the lens barrel 500 and the lens barrel 500 may occur as much as a difference in the amount of deformation of the lens barrel 500 and the lens of the lens part 100. That is, the lenses are spaced apart from the side sidewall portion of the lens barrel 500 due to a difference in the amount of expansion or shrinkage between the lenses and the lens barrel 500 and may have a gap between the inner sidewall 511 of the lens barrel 500 and the lenses.

As a result, the decenters of the lenses of the lens part may be misaligned, so that optical characteristics of the camera module may be deteriorated. Therefore, in the camera module according to the third embodiment to be described below, in order to minimize the decentering of the lens unit defined by a gap between the inner sidewall 511 of the lens barrel 500 and the lenses, the diameter range of the lenses may be adjusted to a range set according to the magnitude of the linear expansion coefficient of the lens barrel 500 and the lenses.

The diameter range of the lenses will be described in detail below. As shown in FIGs. 1, 13 and 14, the lens part 100 has two or more or three or more lenses, for example, and may include a first lens 111, a second lens 113 and a third lens 115. That is, the lens part 100 includes three lenses, and in a case where each lens has a different coefficient of linear expansion, or some of the three or more lenses have the same or similar coefficient of linear expansion and the coefficient of linear expansion of the remaining lenses are different, will be mainly explained.

The first lens 111, the second lens 113, and the third lens 115 may be sequentially disposed along the optical axis Lz of the camera module 1000. For example, based on the movement direction of light moving along the optical axis Lz, the first lens 111, the second lens 113, and the third lens 115 may be arranged sequentially inside the lens barrel 500.

Each of the first to third lenses 111, 113, and 115 may have first to third effective regions, and may have first to third ineffective regions outside the first to third effective regions. The first to third ineffective regions may be regions of the first to third flange portions 111A, 113A, and 115. The first flange portion 111A, which is a first ineffective region of the first lens 111, may contact the first inner sidewall 51 of the lens barrel 500. The second flange portion 113A, which is a second ineffective region of the second lens 113, may contact the second inner sidewall 52 of the lens barrel 500. The third flange portion 115A of the third lens 115 may be in contact with the third inner sidewall 53 of the lens barrel 500.

The first lens 111, the second lens 113, and the third lens 115 may include at least one of glass and plastic. For example, the first lens 111, the second lens 113, and the third lens 115 may all be glass lenses, all plastic lenses, or include both glass lenses and plastic lenses. Hereinafter, for convenience of explanation, it will be mainly described that the first lens 111 is a glass lens, and the second lens 113 and the third lens 115 are plastic lenses.

The first lens 111, the second lens 113, and the third lens 115 may have a coefficient of linear expansion (CTE) in a set range of various sizes according to a material forming the lens. That is, the first lens 111, the second lens 113, and the third lens 115 according to materials forming the first lens 111, the second lens 113, and the third lens 115 may have a coefficient of linear expansion within a set range. In detail, the coefficient of linear expansion of the first lens 111 that is a glass lens may be different from the coefficient of linear expansion of the second lens 113 and the third lens 115 that are plastic lenses. The coefficient of linear expansion of the second lens 113 which is a plastic lens and the coefficient of linear expansion of the third lens 115 may be the same or different. That is, even if both the second lens 113 and the third lens 115 are plastic lenses, the second lens 113 and the third lens 115 may be the same or may have different coefficients of linear expansion depending on the composition of the resin composition the plastic.

The first lens 111, the second lens 113, and the third lens 115 may have a coefficient of linear expansion of greater than 0 ppm/°C and less than or equal to 85 ppm/°C. In detail, the first lens 111, the second lens 113, and the third lens 115 may have a coefficient of linear expansion of greater than 0 ppm/°C and less than or equal to 80 ppm/°C. In more detail, the first lens 111, the second lens 113, and the third lens 115 may have a coefficient of linear expansion of 3 ppm/°C to 80 ppm/°C. As described above, the lens barrel 500, the first lens 111, the second lens 113, and the third lens 115 may have the same or different coefficient of linear expansion. For example, the lens barrel 500 may have a coefficient of linear expansion different from that of at least one of the first lens 111, the second lens 113, and the third lens 115.

Accordingly, deformation amounts of the lens barrel 500, the first lens 111, the second lens 113, and the third lens 115 according to the temperature change may vary.

For example, in the case of the first mode in which the temperature of the camera module changes from the first temperature to the second temperature as shown in FIG. 13, a space between the first lens 111 and the first inner sidewall 51 may be spaced apart by a first interval G4. In this case, the first mode may be defined as a mode that changes from the first temperature to the second temperature that is higher than the first temperature.

The amount of expansion and shrinkage of the lens barrel 500 may be obtained by Equation 1 above.

The amount of expansion and shrinkage of the lens of the lens part 100 may be obtained by Equation 2 above.

As shown in FIGs. 1 and 13, when the temperature of the camera module changes from the first temperature to the second temperature, the lenses and the lens barrel 500 may be expanded by the sizes of Equations 1 and 2, respectively. In this case, when the coefficient of linear expansion of the glass is smaller than the coefficient of linear expansion of the lens barrel 500, the amount of expansion of the lens barrel 500 may be greater than the amount of expansion of the first lens 111 including glass. Accordingly, when the temperature of the camera module changes from the first temperature to the second temperature, a space between the first lens 111 and the first inner sidewall 51 may be spaced apart by the first interval G4.

As shown in FIGs. 1 and 14, in the second mode in which the temperature of the camera module changes from the first temperature to the third temperature, a space between the second lens 113 and the second inner sidewall 52 may be spaced apart by a second interval G5, and a space between the third lens 115 and the third inner sidewall 53 may be spaced apart by a third interval G6. In this case, the second mode may be defined as a mode that changes from the first temperature to a third temperature that is lower than the first temperature.

When the camera module changes from the first temperature to the third temperature, the lenses and the lens barrel 500 may be shrank by the sizes of Equations 1 and 2, respectively. When the coefficient of linear expansion of the plastic is greater than the coefficient of linear expansion of the lens barrel 500, the shrinkage amount of the lens barrel 500 may be smaller than the shrinkage amount of the second lens 113 and the third lens 115 containing plastic. Accordingly, when the temperature of the camera module changes from the first temperature to the third temperature, the second lens 113 and the second inner sidewall 52 may be spaced apart by a second interval G5. The third lens 115 and the third inner sidewall 53 may be spaced apart by the third interval G6. When the camera module changes from the first temperature to the second temperature or the third temperature, an interval between the first lens 111, the second lens 113 and the third lens 115 and the inner sidewall 511 of the lens barrel 500 may be changed by a difference in the amount of deformation, whereby the first lens 111 and the second lens 113 and the third lens 115 may have a decentering shift by the size of the interval, so that optical characteristics of the camera module may be deteriorated.

Accordingly, in the camera module according to the third embodiment, the diameter ranges of the first lens 111, the second lens 113 and the third lens 115 may be set to minimize the decentering of the first lens 111, the second lens 113, and the third lens 115 according to the coefficient of linear expansion of the lens barrel 500, the first lens 111, the second lens 113, and the third lens 115.

The diameter size ranges of the first lens 111, the second lens 113, and the third lens 115 will be described in detail below.

The space maintaining members 121, 123, 124, and 125 may be disposed inside the lens barrel 500. In detail, the space maintaining members may be disposed between the first lens 111, the second lens 113, and the third lens 115, respectively. In detail, a first light blocking film 121 may be disposed between the first lens 111 and the second lens 113. A second light blocking film 124 and/or a space maintaining portion 123 may be disposed between the second lens 113 and the third lens 115. A support member 125 for maintaining a space between the lower portion of the third lens 115 and the optical filter 196 may be disposed.

The flange portions 111A, 113A, and 115A, which are ineffective regions of the first lens 111, the second lens 113, and the third lens 115, may be supported by the first light blocking film 121, the second light blocking film 124, the space maintaining portion 123, and the support member 125. The interval between the first lens 111, the second lens 113, and the third lens 115 may be maintained within a range set by the space maintaining members 121, 123, 124, and 125.

The space maintaining members 121, 123, 124, and 125 may include an opaque material. A material that does not transmit light by the space maintaining members 121, 123, 124, and 125 may be included. Accordingly, it is possible to prevent light from being transmitted and refracted in the ineffective regions of the first lens 111, the second lens 113, and the third lens 115.

Hereinafter, a size of a lens capable of minimizing the decentering of the camera module 1000 according to a temperature change, and a coefficient of linear expansion of the lens and the barrel will be described.

The coefficient of linear expansion of the first lens 111, the second lens 113, and the third lens 115 may be the same or different. In detail, the coefficient of linear expansion of the first lens 111 may be different from the coefficient of linear expansion of the second lens 113 and the coefficient of linear expansion of the third lens 115. That is, since the first lens 111 includes a material different from that of the second lens 113 and the third lens 115, the coefficient of linear expansion of the first lens 111 may be different from the coefficient of linear expansion of the second lens 113 and the coefficient of linear expansion of the third lens 115.

The coefficient of linear expansion of the second lens 113 and the coefficient of linear expansion of the third lens 115 may be the same or different. For example, when the second lens 113 and the third lens 115 include a composition having the same composition and composition ratio, the coefficient of linear expansion of the second lens 113 and the coefficient of linear expansion of the third lens 115 may have the same. In addition, when the second lens 113 and the third lens 115 include a composition having a different composition or a different composition ratio, the coefficient of linear expansion of the second lens 113 and the coefficient of linear expansion of the third lens 115 may be different.

The first lens 111 may have a coefficient of linear expansion within a set range. In detail, the first lens 111 may have a coefficient of linear expansion of 20 ppm/°C or less. In more detail, the first lens 111 may have a coefficient of linear expansion of greater than 0 ppm/°C to 25 ppm/°C. In more detail, the first lens 111 may have a coefficient of linear expansion of 3 ppm/°C to 18 ppm/°C.

Since the first lens 111 includes a glass material, it may be difficult to realize that the coefficient of linear expansion of the first lens 111 exceeds 20 ppm/°C due to the characteristics of the material. In addition, when the coefficient of linear expansion of the first lens 111 exceeds 20 ppm/°C, the refractive index, Abbe number, etc. of the first lens 111 disposed closest to the object in the camera module are changed, so that the camera module optical properties may be deteriorated.

The second lens 113 may have a coefficient of linear expansion within a set range. In detail, the second lens 113 may have a coefficient of linear expansion of 85 ppm/°C or less. In more detail, the second lens 113 may have a coefficient of linear expansion of 55 ppm/°C to 85 ppm/°C. In more detail, the second lens 113 may have a coefficient of linear expansion of 58 ppm/°C to 83 ppm/°C. Since the second lens 113 includes a plastic material, it may be difficult to realize that the coefficient of linear expansion of the second lens 113 exceeds 85 ppm/°C due to the characteristics of the material. In addition, when the coefficient of linear expansion of the second lens 113 exceeds 85 ppm/°C, the refractive index, Abbe's number, etc. of the second lens 113 disposed between the first lens 111 and the third lens 115 in the camera module are changed, so that the optical characteristics of the camera module may be deteriorated.

The third lens 115 may have a coefficient of linear expansion within a set range. In detail, the third lens 115 may have a coefficient of linear expansion of 85 ppm/°C or less. In more detail, the third lens 115 may have a coefficient of linear expansion of 55 ppm/°C to 85 ppm/°C. In more detail, the third lens 115 may have a coefficient of linear expansion of 58 ppm/°C to 83 ppm/°C.

The second lens 113 and the third lens 115 may have the same coefficient of linear expansion within the set range. Alternatively, the second lens 113 and the third lens 115 may have different coefficients of linear expansion within the set range.

Since the third lens 115 includes a plastic material, it may be difficult to realize that the coefficient of linear expansion of the third lens 115 exceeds 85 ppm/°C due to the characteristics of the material. In addition, when the coefficient of linear expansion of the third lens 115 exceeds 85 ppm/°C, the refractive index, Abbe's number, etc. of the third lens 115 disposed closest to the image sensor 192 in the camera module may be changed, so that the optical characteristics of the camera module may be deteriorated.

The lens barrel 500 may have a coefficient of linear expansion within a set range. In detail, the lens barrel 500 may have a coefficient of linear expansion of 80 ppm/°C or less. In more detail, the lens barrel 500 may have a coefficient of linear expansion of greater than 0 ppm/°C to 80 ppm/°C. In more detail, the lens barrel 500 may have a coefficient of linear expansion of 10 ppm/°C to 70 ppm/°C.

Since the lens barrel 500 includes a plastic material, it may be difficult to realize that the coefficient of linear expansion of the lens barrel 500 exceeds 80 ppm/°C due to the characteristics of the material. In addition, when the coefficient of linear expansion of the lens barrel 500 exceeds 80 ppm/°C, in the camera module, the difference in the coefficient of linear expansion between the lens barrel 500 accommodating the first, second and third lenses 111, 113, and 115 and the first, second and third lenses 111, 113, and 115 may increase, so that the decenter of the camera module may be increased, thereby, the optical characteristics of the camera module may be deteriorated.

The first lens 111, the second lens 113, and the third lens 115 may have a size within a set range. In detail, the first lens 111, the second lens 113, and the third lens 115 may have a lens diameter within a set range. Here, the lens diameters of the first lens 111, the second lens 113, and the third lens 115 may be defined as diameters including both the effective region and the ineffective region of each lens as described above. That is, the diameter of the first lens 111 may be defined as the sum of the diameter of the first effective region and the diameter of the first flange portion 111A, and the diameter of the second lens 113 may be defined as the sum of the diameter of the second effective region and the diameter of the second flange portion 113A, and the diameter of the third lens 115 may be defined as the sum of the diameter of the third effective region and the diameter of the third flange portion 115A.

Diameters of the first lens 111, the second lens 113, and the third lens 115 may vary according to the magnitude of the coefficient of linear expansion of the lens barrel 500. In detail, the diameters of the first lens 111, the second lens 113, and the third lens 115 may vary according to coefficients of linear expansion of the lens barrel 500 and the first, second and third lenses 111, 113, and 115. That is, the size of the distance between the lens and the barrel may vary due to the difference in the amount of shrinking and expansion of the lens barrel 500 and the lenses according to the linear expansion coefficients of the lens barrel 500, and the first, second and third lenses 111, 113, and 115.

As the size of the intervals from the first lens 111 and the second lens 113 change according to coefficient of linear expansion of the lens barrel 500, the first lens 111, the second lens 113, and the third lens 115, the size of decenter, which is defined as a deviation between the center and the optical axis of the first lens 111, the second lens 113, and the third lens 115 may vary. In this case, the size of the interval between the lenses 111, 113, and 115 and the lens barrel 500 may be limited to a range set to implement optical characteristics or to prevent deterioration of optical characteristics due to decentering of the lenses.

In consideration of the size of the intervals between the lenses 111, 113, and 115 and the lens barrel 500, the diameters of the lenses 111, 113, and 115 may be limited to a set range. For example, when the first lens 111, the second lens 113, and the third lens 115 are spaced apart from each other inside the barrel, the lenses 111, 113, 115 and the lens barrel 500 may be defined as a distance at which optical properties may be realized. For example, the size of the interval between the lenses 111, 113, and 115 and the lens barrel 500 may be 40 µm or less. When the size of the interval between the lenses 111, 113, and 115 and the lens barrel 500 exceeds 40 µm, the fixing force of the lenses may be reduced due to an increase in the intervals between the lenses 111, 113, and 115 in the camera module 1000, and thereby optical properties of the camera module 1000 may be deteriorated. That is, the maximum interval between the lenses 111, 113, 115 and the lens barrel 500 for realizing the optical characteristics of the camera module may be 40 µm.

Considering the size of the interval between the lenses 111, 113, and 115 and the lens barrel 500, the maximum diameter of the lenses 111, 113, and 115 may be defined by Equation 3 below. [Equation 3] 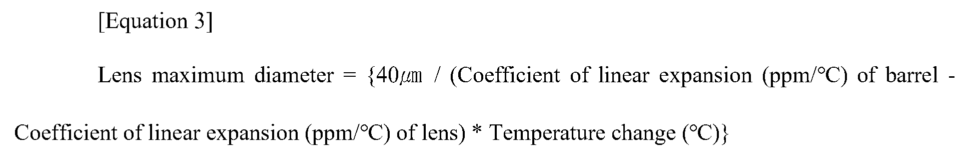 Lens maximum diameter = {40µm / (Coefficient of linear expansion (ppm/°C) of barrel - Coefficient of linear expansion (ppm/°C) of lens) * Temperature change (°C)}

In Equation 3, it may be defined by Equation 3-1 and Equation 3-2 as follows. That is, the interval between the lenses 111, 113, and 115 and the lens barrel 500 may be defined by Equation 3-1 below. [Equation 3-1] 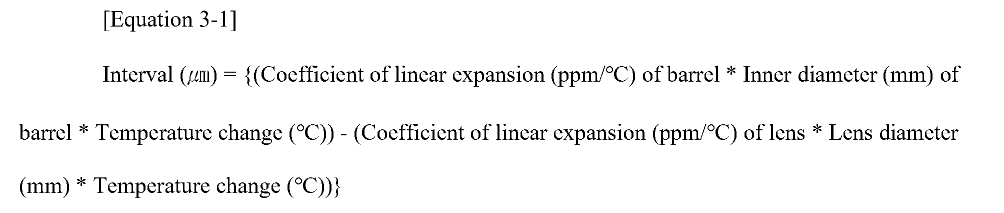 Interval (µm) = {(Coefficient of linear expansion (ppm/°C) of barrel * Inner diameter (mm) of barrel * Temperature change (°C)) - (Coefficient of linear expansion (ppm/°C) of lens * Lens diameter (mm) * Temperature change (°C))}

In Equation 3-1, the size of the interval may be defined by Equation 3-2 on the assumption that the barrel inner diameter and the lens diameter are the same at the first temperature. [Equation 3-2] 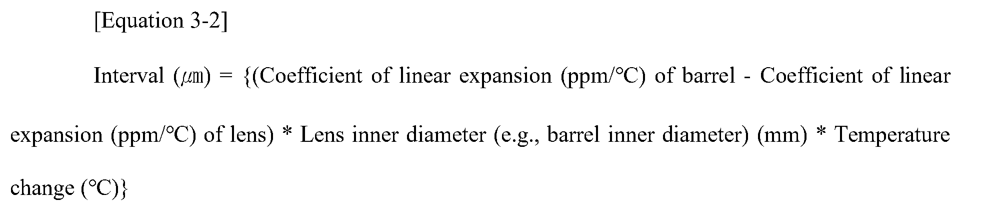 Interval (µm) = {(Coefficient of linear expansion (ppm/°C) of barrel - Coefficient of linear expansion (ppm/°C) of lens) * Lens inner diameter (e.g., barrel inner diameter) (mm) * Temperature change (°C)}

The lenses 111, 113, and 115 may have a diameter greater than or equal to a set size in consideration of optical performance and mechanical processing. In detail, the first lens 111, the second lens 113, and the third lens 115 may have a diameter of 2 mm or more. That is, the minimum diameter of the first lens 111, the second lens 113, and the third lens 115 may be 2 mm. That is, the lenses 111, 113, and 115 consider the coefficient of linear expansion of the lenses 111, 113 and 115, the coefficient of linear expansion of the lens barrel 500, and the minimum diameter of the lenses 111, 113 and 115. In this case, the diameters of the first lens 111, the second lens 113, and the third lens 115 may be defined by Equations 4 to 6 below. [Equation 4] 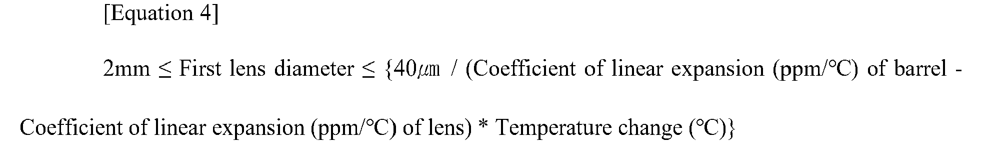 2mm ≤ First lens diameter ≤ {40µm / (Coefficient of linear expansion (ppm/°C) of barrel - Coefficient of linear expansion (ppm/°C) of lens) * Temperature change (°C)}

In Equation 4, the value of {40µm / (coefficient of linear expansion (ppm/°C) of barrel - coefficient of linear expansion (ppm/°C) of lens) * temperature change (°C)} is 2 mm or more. [Equation 5] 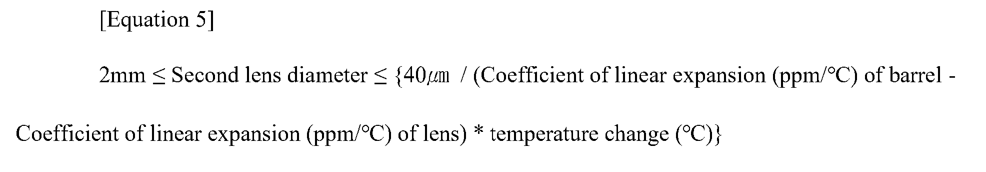 2mm ≤ Second lens diameter ≤ {40µm / (Coefficient of linear expansion (ppm/°C) of barrel - Coefficient of linear expansion (ppm/°C) of lens) * temperature change (°C)}

In Equation 5, the value of {40µm / (coefficient of linear expansion (ppm/°C) of barrel-coefficient of linear expansion (ppm/°C) of lens) * temperature change (°C)} is 2 mm or more. [Equation 6] 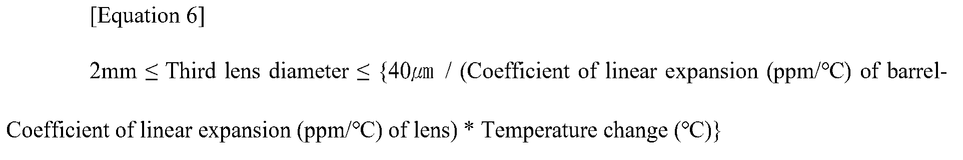 2mm ≤ Third lens diameter ≤ {40µm / (Coefficient of linear expansion (ppm/°C) of barrel-Coefficient of linear expansion (ppm/°C) of lens) * Temperature change (°C)}

In Equation 6, the value of {40µm / (coefficient of linear expansion (ppm/°C of barrel) - coefficient of linear expansion (ppm/°C) of lens) * temperature change (°C)} is 2 mm or more.

When the first lens 111 changes from the first temperature to the second temperature and expands, it may have a diameter satisfying Equation 4 above. In detail, according to Equation 2, the first lens 111 may have a diameter size within a set range.

For example, when the coefficient of linear expansion of the first lens 111 is 3 ppm/°C to 18 ppm/°C, and the coefficient of linear expansion of the lens barrel 500 is greater than 0 ppm/°C to 80 ppm/°C, the first lens 111 may have the diameter of 2 mm to 250 mm. When the coefficient of linear expansion of the first lens 111 is 3 ppm/°C to 18 ppm/°C, and the coefficient of linear expansion of the lens barrel 500 is greater than 0 ppm/°C to 10 ppm/°C, the first lens 111 may have a diameter of 2 mm to 186 mm. When the coefficient of linear expansion of the first lens 111 is 3 ppm/°C to 18 ppm/°C, and the coefficient of linear expansion of the lens barrel 500 is greater than 10 ppm/°C to 20 ppm/°C, the first lens 111 may have a diameter of 2 mm to 250 mm.

Preferably, when the coefficient of linear expansion of the first lens 111 is 3 ppm/°C to 18 ppm/°C, and the coefficient of linear expansion of the lens barrel 500 is more than 20 ppm/°C to 30 ppm/°C, the second lens 111 may have a diameter of 2 mm to 42 mm. When the coefficient of linear expansion of the first lens 111 is 3 ppm/°C to 18 ppm/°C, and the coefficient of linear expansion of the lens barrel 500 is more than 30 ppm/°C to 40 ppm/°C, the first lens 111 may have a diameter of 2 mm to 23 mm. When the coefficient of linear expansion of the first lens 111 is 3 ppm/°C to 18 ppm/°C, and the coefficient of linear expansion of the lens barrel 500 is more than 40 ppm/°C to 50 ppm/°C, the first lens 111 may have a diameter of 2 mm to 16 mm.

Preferably, when the coefficient of linear expansion of the first lens 111 is 3 ppm/°C to 18 ppm/°C, and the coefficient of linear expansion of the lens barrel 500 is more than 50 ppm/°C to 60 ppm/°C, the first lens 111 may have a diameter of 2 mm to 13 mm. When the coefficient of linear expansion of the first lens 111 is 3 ppm/°C to 18 ppm/°C, and the coefficient of linear expansion of the lens barrel 500 is more than 60 ppm/°C to 70 ppm/°C, the first lens 111 may have a diameter of 2 mm to 10 mm. When the coefficient of linear expansion of the first lens 111 is 3 ppm/°C to 18 ppm/°C, and the coefficient of linear expansion of the lens barrel 500 is more than 70 ppm/°C to 80 ppm/°C, the first lens 111 may have a diameter of 2 mm to 9 mm.

When the second lens 113 and the third lens 115 change from the first temperature to the third temperature and shrink, the second and third lenses 113 and 115 may have lens diameters satisfying Equations 5 and 6, respectively. For example, the coefficient of linear expansion of the second lens 113 and the third lens 115 are 55 ppm/°C to 80 ppm/°C, respectively, and the coefficient of linear expansion of the lens barrel 500 is greater than 0 ppm/°C to 80 ppm/°C, the diameter of the second lens 113 and the third lens 115 may be 2 mm to 620 mm, respectively.

Preferably, when the coefficient of linear expansion of the second lens 113 and the third lens 115 is 55 ppm/°C to 80 ppm/°C, respectively, and the coefficient of linear expansion of the lens barrel 500 is greater than 0 ppm/°C to 10 ppm/°C, the diameters of the second lens 113 and the third lens 115 may be 2 mm to 14 mm, respectively. When the second lens 113 and the third lens 115 have a coefficient of linear expansion of 55 ppm/°C to 80 ppm/°C, respectively, and a coefficient of linear expansion of the lens barrel 500 is greater than 10 ppm/°C to 20 ppm/°C, respectively, the diameters of the second lens 113 and the third lens 115 may be 2 mm to 18 mm, respectively.

Preferably, when the coefficients of linear expansion of the second lens 113 and the third lens 115 are 55 ppm/°C to 80 ppm/°C, respectively, and the coefficient of linear expansion of the lens barrel 500 is greater than 20 ppm/°C to 30 ppm/°C, the diameters of the second lens 113 and the third lens 115 may be 2 mm to 25 mm, respectively. When the second lens 113 and the third lens 115 have a coefficient of linear expansion of 55 ppm/°C to 80 ppm/°C, respectively, and a coefficient of linear expansion of the lens barrel 500 is greater than 30 ppm/°C to 40 ppm/°C, the diameters of the second lens 113 and the third lens 115 may be 2 mm to 41 mm, respectively.

Preferably, when the coefficients of linear expansion of the second lens 113 and the third lens 115 are 55 ppm/°C to 80 ppm/°C, respectively, and the coefficient of linear expansion of the lens barrel 500 is greater than 40 ppm/°C to 50 ppm/°C, the diameters of the second lens 113 and the third lens 115 may be 2 mm to 124 mm, respectively. When the second lens 113 and the third lens 115 have a coefficient of linear expansion of 55 ppm/°C to 80 ppm/°C, respectively, and a coefficient of linear expansion of the lens barrel 500 is greater than 50 ppm/°C to 60 ppm/°C, respectively, the diameters of the second lens 113 and the third lens 115 may be 2 mm to 620 mm, respectively.

Preferably, when the coefficients of linear expansion of the second lens 113 and the third lens 115 are 55 ppm/°C to 80 ppm/°C, respectively, and the coefficient of linear expansion of the lens barrel 500 is greater than 60 ppm/°C to 70 ppm/°C, the diameters of the second lens 113 and the third lens 115 may be 2 mm to 41 mm, respectively. When the second lens 113 and the third lens 115 have a coefficient of linear expansion of 55 ppm/°C to 80 ppm/°C, respectively, and a coefficient of linear expansion of the lens barrel 500 is greater than 70 ppm/°C to 80 ppm/°C, respectively, the diameters of the second lens 113 and the third lens 115 may be 2 mm to 124 mm, respectively.

When changing from the first temperature to the second temperature or the third temperature, the first lens 111, the second lens 113, and the third lens 115 may have a diameter in a range set in a consideration of the coefficients of linear expansion of the lens barrel 500, the first lens 111, the second lens 113, and the third lens 115, and the intervals between the first lens 111, the second lens 113 and the third lens 115 and the lens barrel 500. Accordingly, the camera module including the first lens 111, the second lens 113, and the third lens 115 have improved optical properties by controlling the intervals between the lenses and the barrel according to the temperature change and controlling the decenter sizes of the lenses.

The diameters of the lenses 111, 113, and 115 may be limited to a range set in consideration of the decenter sizes of the first lens 111, the second lens 113, and the third lens 115. The maximum diameters of the lenses 111, 113, and 115 in consideration of the decenters of the first lens 111, the second lens 113, and the third lens 115 may be defined by Equations 7 to 10 below. [Equation 7] 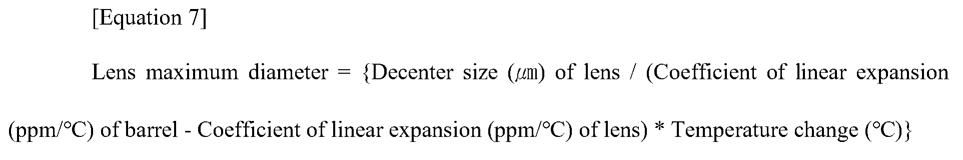 Lens maximum diameter = {Decenter size (µm) of lens / (Coefficient of linear expansion (ppm/°C) of barrel - Coefficient of linear expansion (ppm/°C) of lens) * Temperature change (°C)}

Here, in the lenses 111, 113, and 115, when considering the coefficient of linear expansion in consideration of the decenter size of the lenses 111, 113, and 115, a coefficient of linear expansion of the lens barrel 500, and considering a minimum diameter of the lenses 111, 113, and 115, the diameters of the first lens 111, the second lens 113, and the third lens 115 may be defined by Equations 8 to 10 below. [Equation 8] 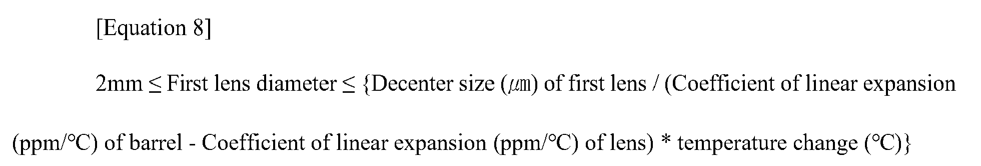 2mm ≤ First lens diameter ≤ {Decenter size (µm) of first lens / (Coefficient of linear expansion (ppm/°C) of barrel - Coefficient of linear expansion (ppm/°C) of lens) * temperature change (°C)}

In Equation 8, the value of {decenter size (µm) of first lens / (coefficient of linear expansion (ppm/°C) of barrel - coefficient of linear expansion (ppm/°C) of lens) * temperature change (°C)} is 2 mm or more. [Equation 9] 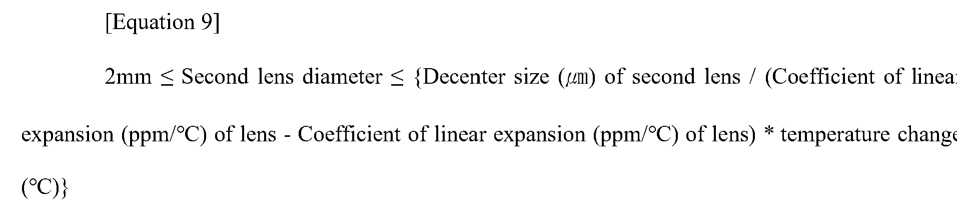 2mm ≤ Second lens diameter ≤ {Decenter size (µm) of second lens / (Coefficient of linear expansion (ppm/°C) of lens - Coefficient of linear expansion (ppm/°C) of lens) * temperature change (°C)}

In Equation 9, the value of {decenter size (µm) of second lens / (coefficient of linear expansion (ppm/°C) of barrel - coefficient of linear expansion (ppm/°C) of lens) * temperature change (°C)} is 2 mm or more. [Equation 10] 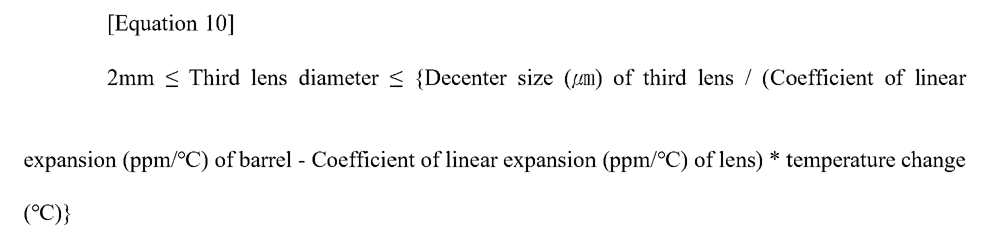 2mm ≤ Third lens diameter ≤ {Decenter size (µm) of third lens / (Coefficient of linear expansion (ppm/°C) of barrel - Coefficient of linear expansion (ppm/°C) of lens) * temperature change (°C)}

In Equation 10, the value of {decenter size (µm) of third lens / (coefficient of linear expansion (ppm/°C) of barrel - coefficient of linear expansion (ppm/°C) of lens) * temperature change (°C)} is 2 mm or more.

In Equations 8 to 10, when the first lens 111 changes from the first temperature to the second temperature and expands, the first lens 111 may have a diameter satisfying Equation 8. The allowable decenter size of the first lens 111 may be 15 µm or less. That is, the decenter size of the first lens 111 for realizing the optical characteristics of the camera module 1000 may be 15 µm or less. Accordingly, according to Equation 8, the first lens 111 may have a diameter size within a range set in consideration of the decenter size of the first lens 111.

For example, when the decenter size of the first lens 111 is 15 µm, the coefficient of linear expansion of the first lens 111 is 3 ppm/°C to 18 ppm/°C, and the coefficient of linear expansion of the lens barrel 500 is greater than 0 ppm/°C to 80 ppm/°C, the diameter of the first lens 111 may be 2 mm to 75 mm. Preferably, when the decenter size of the first lens 111 is 15 µm, the coefficient of linear expansion of the first lens 111 is 3 ppm/°C to 18 ppm/°C, and the coefficient of linear expansion of the lens barrel 500 is greater than 0 ppm/°C to 10 ppm/°C, the diameter of the first lens 111 may be 2 mm to 70 mm.

Preferably, when the decenter size of the first lens 111 is 15 µm, the coefficient of linear expansion of the first lens 111 is 3 ppm/°C to 18 ppm/°C, and the coefficient of linear expansion of the lens barrel 500 is greater than 10 ppm/°C to 20 ppm/°C, the diameter of the first lens 111 may be 2 mm to 75 mm. Preferably, the decenter size of the first lens 111 is 15 µm, the coefficient of linear expansion of the first lens 111 is 3 ppm/°C to 18 ppm/°C, and the coefficient of linear expansion of the lens barrel 500 is greater than 20 ppm/°C to 30 ppm/°C, the diameter of the first lens 111 may be 2 mm to 15 mm.

Preferably, when the decenter size of the first lens 111 is 15 µm, the coefficient of linear expansion of the first lens 111 is 3 ppm/°C to 18 ppm/°C, and the coefficient of linear expansion of the lens barrel 500 is greater than 30 ppm/°C to 40 ppm/°C, the diameter of the first lens 111 may be 2 mm to 9 mm. Preferably, the decenter size of the first lens 111 is 15 µm, the coefficient of linear expansion of the first lens 111 is 3 ppm/°C to 18 ppm/°C, and the coefficient of linear expansion of the lens barrel 500 is greater than 40 ppm/°C to 50 ppm/°C, the diameter of the first lens 111 may be 2 mm to 6 mm.

Preferably, the decenter size of the first lens 111 is 15 µm, the coefficient of linear expansion of the first lens 111 is 3 ppm/°C to 18 ppm/°C, and the coefficient of linear expansion of the lens barrel 500 is greater than 50 ppm/°C to 60 ppm/°C, the diameter of the first lens 111 may be 2 mm to 5 mm. Preferably, when the decenter size of the first lens 111 is 15 µm, the coefficient of linear expansion of the first lens 111 is 3 ppm/°C to 18 ppm/°C, and the coefficient of linear expansion of the lens barrel 500 is greater than 60 ppm/°C to 70 ppm/°C, the diameter of the first lens 111 may be 2 mm to 4 mm.

Preferably, when the decenter size of the first lens 111 is 15 µm, the coefficient of linear expansion of the first lens 111 is 3 ppm/°C to 18 ppm/°C, and the coefficient of linear expansion of the lens barrel 500 is greater than 70 ppm/°C to 80 ppm/°C, the diameter of the first lens 111 may be 2 mm to 3 mm.

In the second lens 113 and the third lens 115, when changing from the first temperature to the third temperature and shrink, they may have lens diameters satisfying Equations 9 and 10, respectively. The allowable decenter size of the second lens 113 and the third lens 115 may be 6 µm or less. That is, the decenter size of the second lens 113 and the third lens 115 for realizing the optical characteristics of the camera module 1000 may be 6 µm or less.

For example, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is greater than 0 ppm/°C to 80 ppm/°C, the diameter of each of the second lens 113 and the third lens 115 may be 2 mm to 95 mm.

Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is greater than 0 ppm/°C to 10 ppm/°C, the diameters of each of the second lens 113 and the third lens 115 may be between 2 mm to 2.2 mm. Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is more than 10 ppm/°C to 20 ppm/°C, the diameter of each of the second lens 113 and the third lens 115 may be 2 mm to 3 mm.

Preferably, when the decenter size of the second lens 113 and the third lens 115 is 6 µm, the coefficient of linear expansion of each of the second lens 113 and the third lens 115 is 3 ppm/°C to 18 ppm/°C, and the coefficient of linear expansion of the lens barrel 500 is more than 20 ppm/°C to 30 ppm/°C, the diameters of the second lens 113 and the third lens 115 may be between 2 mm and 4 mm. Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is more than 30 ppm/°C to 40 ppm/°C, the diameter of each of the second lens 113 and the third lens 115 may be between 2 mm and 7 mm. Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is more than 40 ppm/°C to 50 ppm/°C, the diameter of each of the second lens 113 and the third lens 115 may be between 2 mm and 19 mm.

Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is more than 50 ppm/°C to 60 ppm/°C, the diameter of each of the second lens 113 and the third lens 115 may be between 2 mm and 95 mm.

Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is more than 60 ppm/°C to 70 ppm/°C, the diameter of each of the second lens 113 and the third lens 115 may be 2 mm to 7 mm. Preferably, when the decenter size of the second lens 113 and the third lens 115 is 6 µm, the coefficient of linear expansion of the second lens 113 and the third lens 115 is 3 ppm/°C to 18 ppm/°C, respectively, and the coefficient of linear expansion of the lens barrel 500 is greater than 70 ppm/°C to 80 ppm/°C, the diameter of each of the second lens 113 and the third lens 115 may be 2 mm to 19 mm.

When changing from the first temperature to the second temperature or the third temperature, the first lens 111, the second lens 113, and the third lens 115 may have a diameter in a range set in a consideration of the coefficients of linear expansion of the lens barrel 500, the first lens 111, the second lens 113, and the third lens 115 and a consideration of a value of the decenter of the first lens 111, the second lens 113, and the third lens 115. Accordingly, the camera module including the first lens 111, the second lens 113, and the third lens 115 may have improved optical characteristics by controlling the size of the interval between the lenses and the barrel according to the temperature change, and controlling the decenter size.

Hereinafter, the heat dissipation member of the camera module according to the examples and comparative examples of the third embodiment and the thermal characteristics of the heat dissipation member will be described in detail. These embodiments are merely presented as examples in order to explain the invention in more detail. Therefore, the invention is not limited to these examples.

### [Example 1]

The first lens, the second lens, and the third lens were disposed inside the barrel. In this case, a space maintaining member is disposed between the first lens, the second lens, and the third lens to maintain the interval between the lenses. Then, the camera module is changed from a first temperature of 25°C to a second temperature of 105°C and a third temperature of -40°C, and the diameters of the first lens, the second lens and the third lens were measured according to Equations 4 to 6 in the coefficient of linear expansion of the barrel in various ranges.

### [Example 2]

The first lens, the second lens, and the third lens were disposed inside the barrel. In this case, a space maintaining member is disposed between the first lens, the second lens, and the third lens to maintain the intervals between the lenses. Then, the temperature of the camera module is changed from the first temperature of 25°C to the second temperature of 105°C and the third temperature of -40°C, and the diameters of the first lens, the second lens and the third lens were measured according to Equations 8 to 10 in the coefficient of linear expansion of the barrel in various ranges. In this case, the decenter size of the first lens was 15 µm, and the decenter size of the second lens and the third lens was 6 µm.

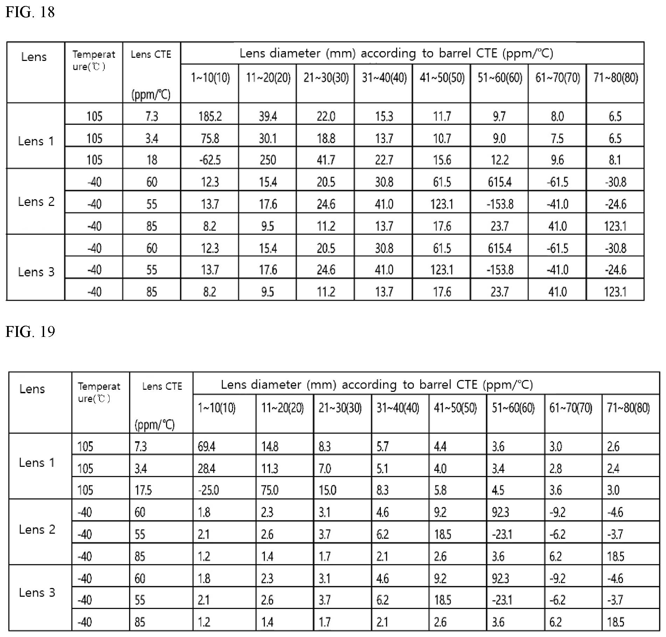

FIG. 18 is a table of diameters of first to third lenses according to Example 1 of the third embodiment, and FIG. 19 is a table of diameters of first to third lenses according to Example 2 of the third embodiment.

In FIGs. 18 and 19, data having a negative value and data having a value of less than 2 mm are only result values obtained by an equation, and do not mean the actual diameters of the first to third lenses.

Referring to FIG. 18, it may be seen that the lens according to Example 1 has the same diameter range as in FIG. 18 when the intervals between the first lens, the second lens, and the third lens and the barrel is 40 µm. Referring to FIG. 19, it may be seen that the lens according to Example 2 has the same diameter range as in FIG. 19 when the decenter of the first lens is 15 µm and the decenter of the second and third lenses is 6 µm. In the camera module according to the third embodiment, when the temperature changes from room temperature to high temperature or from room temperature to low temperature, the diameter size of the lens may be controlled within a set range in consideration of the size range of the interval between the lens and the barrel and/or the size of the lens decenter. Accordingly, the camera module according to the third embodiment may prevent deterioration of optical performance of lenses due to temperature change, and thus may have improved optical properties.

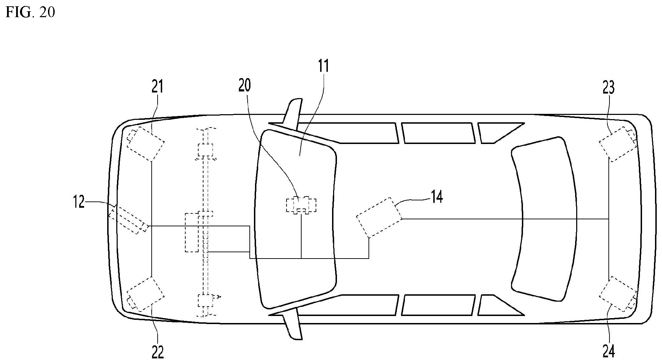

FIG. 20 is an example of a plan view of a vehicle to which a camera module according to an embodiment of the invention is applied. Referring to FIG. 20, a vehicle camera system according to an embodiment of the invention includes an image generating unit 11, a first information generating unit 12, second information generating units 21, 22, 23, 24, and a control unit 14. The image generating unit 11 may include at least one camera module 20 disposed in the own vehicle, and may generate a front image of the own vehicle or an image inside the vehicle by photographing the front and/or driver of the own vehicle. In addition, the image generating unit 11 may generate an image captured by the driver or the surroundings of the own vehicle in one or more directions as well as in front of the own vehicle by using the camera module 20. Here, the front image and the surrounding image may be a digital image, and may include a color image, a black-and-white image, and an infrared image. In addition, the front image and the surrounding image may include a still image and a moving image. The image generating unit 11 provides the driver image, the front image, and the surrounding image to the control unit 14. Next, the first information generating unit 12 may include at least one radar and/or a camera disposed on the own vehicle, and generates first detection information by detecting the front of the own vehicle. Specifically, the first information generating unit 12 is disposed in the own vehicle, and generates the first sensing information by detecting the positions and speeds of vehicles located in front of the own vehicle, the presence and location of pedestrians, and the like.

By using the first detection information generated by the first information generating unit 12, it is possible to control to maintain a constant distance between the own vehicle and the vehicle in front, and the stability of vehicle operation may be improved in a preset specific case, such as when the driver wants to change the driving lane of the own vehicle or when reverse parking. The first information generating unit 12 provides the first detection information to the control unit 14. The second information generating unit 21, 22, 23, 24 detect each side of the own vehicle and generate second sensing information based on the front image generated by the image generating unit 11 and the first sensing information generated by the first information generating unit 12. Specifically, the second information generating units 21, 22, 23, and 24 may include at least one radar and/or camera disposed on the own vehicle, and detect the positions and speeds of vehicles located on the side of the own vehicle, or may take a video. Here, the second information generating units 21, 22, 23, and 24 may be disposed on both sides of the front and rear of the own vehicle, respectively. Such a vehicle camera system may include the following camera module, and may protect the vehicle and objects from automatic driving or surrounding safety by providing or processing information obtained through the front, rear, each side or corner region of the own vehicle to the user.

A plurality of optical systems of the camera module according to an embodiment of the invention may be mounted in a vehicle for safety regulation, reinforcement of autonomous driving functions, and increased convenience. In addition, the optical system of the camera module is a part for control such as a lane keeping assistance system (LKAS), a lane departure warning system (LDWS), and a driver monitoring system (DMS), and is applied in a vehicle. Such a vehicle camera module may realize stable optical performance even when ambient temperature changes and provide a module with competitive price, thereby securing reliability of vehicle components.

In the embodiment of the invention, in applying a spacer having a buffer structure on the outer side of at least one lens for a temperature change from a low temperature of -20 degrees or less to a high temperature of 70 degrees or more in a camera module of a vehicle, for example, a change in the range of -40 degrees to 105 degrees, the spacer relieves the lens with a high coefficient of thermal expansion in the longitudinal direction, thereby providing elasticity to contract or expand against the expansion of the lens made of plastic or glass, and suppress the amount of change in the optical axis direction of the effective diameter region of the lens. Accordingly, it is possible to reduce a change in optical characteristics of a camera module employing a lens made of plastic or glass. In addition, the outer flange portion of the lens may further include a buffer structure, it is possible to suppress the elastic deformation of the lens itself.

Features, structures, effects, etc. described in the above embodiments are included in at least one embodiment of the invention, and are not necessarily limited to only one embodiment. Furthermore, features, structures, effects, etc. illustrated in each embodiment may be combined or modified for other embodiments by those of ordinary skill in the art to which the embodiments belong. Accordingly, the contents related to such combinations and modifications should be interpreted as being included in the scope of the invention. In addition, although the embodiment has been described above, it is only an example and does not limit the invention, and those of ordinary skill in the art to which the invention pertains are exemplified above in a range that does not depart from the essential characteristics of the present embodiment. It may be seen that various modifications and applications that have not been made are possible. For example, each component specifically shown in the embodiment may be implemented by modification. And the differences related to these modifications and applications should be construed as being included in the scope of the invention defined in the appended claims.

### [ITEMS]

Item 1. A camera module comprising:
a lens barrel having a through hole therein;
a lens part disposed in the through hole of the lens barrel and having a first lens, a second lens, and a third lens in which optical axis are aligned from an object side toward a sensor side; and
an image sensor,
wherein a material of the second lens and a material of the first lens are different,
wherein a refractive index of the second lens is lower than a refractive index of the first lens,
wherein each of the first lens, the second lens, and the third lens includes a first flange portion, a second flange portion, and a third flange portion extending from the optical axis toward an inner sidewall of the lens barrel,
wherein an outer diameter of the lens barrel at a position where an upper portion of the first flange portion and the lens barrel are in contact is a first outer diameter,
wherein an outer diameter of the lens barrel at a position where an upper portion of the second flange portion and the lens barrel are in contact is a second outer diameter,
wherein an outer diameter of the lens barrel at a position where an upper portion of the third flange portion and the lens barrel are in contact is a third outer diameter,
wherein an outer diameter of the lens barrel at a position where an upper portion of the image sensor and the lens barrel are in contact is a four outer diameter, and
wherein the third outer diameter is smaller than the fourth radius and greater than the second outer diameter.

Item 2. The camera module of item 1, wherein the first outer diameter is smaller than the third outer diameter.

Item 3. The camera module of item 1, further comprising an optical filter disposed inside a lower end of the lens barrel and disposed between the third lens and the image sensor.

Item 4. The camera module of item 1 or 2, wherein a thickness of the first support portion is a minimum distance between an inner surface and an outer surface of the first support portion, and is equal to a thickness of the second support portion.

Item 5. The camera module of item 3, wherein the thickness of the second support portion is a minimum distance between an inner surface and an outer surface of the second support portion, and is equal to a thickness of the third support portion.

Item 6. A camera module comprising:
a lens barrel having a through hole therein; and
a first lens, a second lens, and a third lens disposed in the through hole of the lens barrel and aligned with an optical axis from an object side toward a sensor side,
wherein a material of the second lens and a material of the first lens are different,
wherein a refractive index of the second lens is lower than a refractive index of the first lens,
wherein each of the first lens, the second lens, and the third lens includes a first flange portion, a second flange portion, and a third flange portion extending from the optical axis toward an inner surface of the lens barrel,
wherein the lens barrel includes a first support portion disposed outside the first flange portion, a second support portion disposed outside the second flange portion, and a third support portion disposed outside the third flange portion,
wherein the first, second, and third support portions include sections in which an inner sidewall and an outer surface of the lens barrel are perpendicular to each other from outside of each of the first, second, and third lenses,
wherein an outer surface of the first support portion has a first depth, an outer surface of the second support portion has a second depth, and the third support portion having a third depth, based on an imaginary straight-line parallel to the optical axis on the outer surface of a lower end of the lens barrel, and
wherein the second depth is smaller than the first depth and smaller than the third depth.

Item 7. The camera module of item 6, comprising an optical filter disposed inside the lower end of the lens barrel and disposed between the third lens and the image sensor.

Item 8. The camera module of item 6 or 7, wherein a thickness of the first support portion is a minimum distance between an inner surface and an outer surface of the first support portion, and is equal to a thickness of the second support portion.

Item 9. The camera module of item 8, wherein the thickness of the second support portion is a minimum distance between an inner surface and an outer surface of the second support portion, and is equal to a thickness of the third support portion.

Item 10. The camera module of item 1 or 6, further comprising: a first inclined portion extending obliquely from the first support portion toward the second support portion; and a second inclined portion inclinedly extending from the second support portion toward the third support portion.

Item 11. The camera module of item 1 or 6, wherein an inner surface of the second support portion is in contact with an outer surface of the second flange portion, and
wherein a length of the first contact surface in which the second flange portion of the second lens contacts an inner surface of the first support portion is 20% to 50% of a thickness of the flange portion.

Item 12. The camera module of item 11, wherein the first lens on the optical axis comprises an object-side first surface and a sensor-side second surface,
wherein an object-side third surface and a sensor-side fourth surface of the second lens have different radii of curvature on the optical axis,
wherein a center of a first contact surface of the second lens in which the second flange portion contacts an inner surface of the second support portion is located closer to a side a greater radius of curvature among the third surface and the fourth surface based on a center of a thickness of the second flange portion.

Item 13. The camera module of item 12, wherein the center of the first contact surface is located closer to the object side than the center of the flange portion of the second lens.

Item 14. The camera module of item 12, wherein a difference in radius of curvature between the third surface and the fourth surface is 1 or more.

Item 15. The camera module of item 14, wherein the radius of curvature of the third surface is greater than the radius of curvature of the fourth surface, and
wherein the center of the first contact surface is located closer to the object side than the center of the flange portion of the second lens.

Item 16. The camera module of item 15, wherein a diameter of the first lens is smaller than a diameter of the second lens.

Item 17. The camera module of item 1 or 6, wherein a material of the third lens and the material of the first lens are different,
wherein a refractive index of the third lens is lower than the refractive index of the first lens,
wherein the third flange portion of the third lens includes a second contact surface in contact with an inner surface of the third support portion of the lens barrel,
wherein a length of the second contact surface is 20% to 50% of a thickness of the third flange portion.

## Claims

1. An optical module (1000) comprising:
a lens barrel (500) including a through hole (515); and
a lens part (100) disposed in the through hole (515) and including a first lens (111), a second lens (113), and a third lens (115) sequentially arranged along an optical axis from an object toward an image sensor (192),
wherein an inner side wall (511) of the lens barrel (500) includes a first inner sidewall, a second inner sidewall, and a third inner sidewall within the through hole,
wherein a refractive index of the first lens (111) is greater than a refractive index of the second lens (113),
wherein the refractive index of the first lens (111) is greater than a refractive index of the third lens (115),
wherein a surface of the first lens (111) adjacent to the object has a convex shape on the optical axis, and a surface of the first lens adjacent to the second lens (113) has a concave shape on the optical axis,
wherein a coefficient of linear expansion of the first lens (111) is less than a coefficient of linear expansion of each of the second lens (113) and the third lens (115),
wherein a coefficient of linear expansion of the lens barrel (500) is greater than the coefficient of linear expansion of the first lens (111),
wherein the coefficient of linear expansion of the lens barrel (500) is equal to or less than the coefficient of linear expansion of each of the second lens (113) and the third lens (115),
wherein a difference between the coefficient of linear expansion of the lens barrel (500) and the coefficient of linear expansion of the first lens (111) is less than a difference between the coefficient of linear expansion of the lens barrel (500) and the coefficient of linear expansion of the second lens (113),
wherein a diameter of the first lens (111) is less than a diameter of each of the second lens (113) and the third lens (113), and
wherein the first lens, the second lens, and the third lens have gaps with the first inner sidewall, the second inner sidewall, and the third inner sidewall of the lens barrel, respectively, the gaps being different from one another depending on temperature.

2. The optical module (1000) according to claim 1,
wherein the lenses in the lens barrel consist of the first lens, the second lens, and the third lens,
wherein each of the first lens, the second lens, and the third lens includes an effective region on which light is incident and an ineffective region on which light is not incident, and
wherein the diameter of the first lens, the diameter of the second lens, and the diameter of the third lens are each defined as a sum of the effective region and the ineffective region.

3. The optical module (1000) according to claim 1 or 2,
wherein a center thickness of the first lens is greater than a center thickness of each of the second lens and the third lens.

4. The optical module (1000) according to claim 3,
wherein the coefficient of linear expansion of the first lens is greater than 0 ppm/°C and equal to or less than 20 ppm/°C,
wherein the coefficient of linear expansion of the second lens is in a range of 5 ppm/°C to 60 ppm/°C, and
wherein the coefficient of linear expansion of the third lens is in a range of 5 ppm/°C to 60 ppm/°C.

5. The optical module (1000) according to claim 4,
wherein the diameter of the first lens is in a range of 3 mm to 5 mm,
wherein the diameter of each of the second lens and the third lens is in a range of 3 mm to 9 mm, and
wherein the diameter of the second lens is less than the diameter of the third lens.

6. The optical module (1000) according to any one of claims 3 to 5,
wherein the coefficient of linear expansion of the first lens is greater than 0 ppm/°C and equal to or less than 10 ppm/°C,
wherein the coefficient of linear expansion of the second lens is in a range of 50 ppm/°C to 60 ppm/°C, and
wherein the coefficient of linear expansion of the third lens is in a range of 50 ppm/°C to 60 ppm/°C.

7. The optical module (1000) according to claim 6,
wherein the diameter of the first lens is in a range of 3.2 mm to 4.4 mm,
wherein the diameter of each of the second lens and the third lens is in a range of 4.5 mm to 8 mm, and
wherein the diameter of the second lens is less than the diameter of the third lens.

8. The optical module (1000) according to claim 7,
wherein the coefficient of linear expansion of the lens barrel is in a range of 29 ppm/°C to 50 ppm/°C.

9. The optical module (1000) according to claim 8,
wherein the coefficient of linear expansion of the lens barrel is in a range of 39 ppm/°C to 60 ppm/°C.

10. The optical module (1000) according to claim 7,
wherein the first lens comprises glass, and
wherein each of the second lens and the third lens comprises plastic.

11. The optical module (1000) according to any one of claims 1 to 10,
wherein the optical module (1000) is operated in:
a first mode in which the temperature changes from a first temperature to a second temperature higher than the first temperature; and
a second mode in which the temperature changes from the first temperature to a third temperature lower than the first temperature,
wherein, in the first mode, a gap between the first lens and the first inner sidewall is equal to or less than 15 µm,
wherein, in the second mode, a gap between the second lens and the second inner sidewall is equal to or less than 6 µm,
wherein, in the second mode, a gap between the third lens and the third inner sidewall is equal to or less than 6 µm,
wherein the first temperature is in a range of 20°C to 30°C,
wherein the second temperature is in a range of 80°C to 105°C, and
wherein the third temperature is in a range of -40°C to -30°C.

12. The optical module (1000) according to any one of claims 1 to 10,
wherein the first lens is disposed in contact with the first inner sidewall,
wherein the second lens is disposed in contact with the second inner sidewall,
wherein the third lens is disposed in contact with the third inner sidewall,
wherein the first lens expands in a first mode in which the temperature changes from a first temperature to a second temperature higher than the first temperature,
wherein the second lens and the third lens contract in a second mode in which the temperature changes from the first temperature to a third temperature lower than the first temperature.

13. The optical module (1000) according to claim 11 or 12,
wherein, in the first mode, a difference between an amount of expansion of the lens barrel and an amount of expansion of the first lens (the amount of expansion of the lens barrel - the amount of expansion of the first lens) is equal to or less than 18 µm.

14. The optical module (1000) according to claim 13,
wherein, in the second mode, a difference between an amount of contraction of the second lens or the third lens and an amount of contraction of the lens barrel (the amount of contraction of the second lens or the third lens - the amount of contraction of the lens barrel) is equal to or less than 9 µm.

15. The optical module (1000) according to any one of claims 1 to 13,
wherein the through hole of the lens barrel has an upper diameter larger than the lower diameter.
